# EUROPEAN PATENT APPLICATION

(11) **EP 0 588 135 A1**
(43) Date of publication of application: **23.03.1994**
(21) Application number: 93113798.8
(22) Date of filing: 28.08.1993
(51) Int. Cl.: B62D 7/15

(54) **Rear wheel steering angle controlling apparatus of four-wheel steering vehicle**

(30) Priority: 01.09.1992 JP 233372/92; 21.12.1992 JP 340004/92; 12.03.1993 JP 51908/93
(71) Applicant: MATSUSHITA ELECTRIC INDUSTRIAL CO., LTD., Kadoma-shi, Osaka-fu, 571 (JP)
(72) Inventor: Ishida, Akira, Sakai-shi, Osaka-fu (JP); Fukunaga, Takashi, Hirakata-shi, Osaka-fu (JP); Segawa, Akiyoshi, Asahi-ku, Osaka-shi (JP)
(74) Representative: Eisenführ, Speiser & Partner

(57) **Abstract**

A control system robust with respect to a vehicle dynamic characteristic variation by a vehicle speed change by estimating an unknown characteristic term in a target yaw rate following system so as to reduce a side slip angle at a transmission time, wherein right, left rear wheels (19) are directly steered with the use of an electric motor controlling means (18), and an instruction signal to a motor controlling means (18) is calculated with a simple calculation with the use of a vehicle speed characteristic estimating means (17) with a control amount calculating means (16) so that a real yaw rate may follow a target yaw rate calculated by a target yaw rate calculating means (15) with the use of respective sensor output values of a vehicle speed sensor (11), a yaw rate sensor (12), a handle angle sensor (13), a rear wheel steering sensor (14) for each control period.

## Description

### BACKGROUND OF THE INVENTION

The present invention relates to an apparatus for controlling the steering angle of a rear wheel of a four-wheel steering vehicle in which the rear wheel is steered in accordance with a handle steering angle, a vehicle speed, a vehicle yaw rate in a vehicle such as automobile or the like.

Various four-wheel steering apparatuses for improving steering stability during a vehicle traveling operation are proposed. As disclosed in, for example, Japanese Patent Laid-Open Publication No. 3-164374, an actual yaw rate (rotary angular velocity around the gravity center of a vehicle body seen from above the vehicle body) is detected by a yaw rate sensor in an handle steering angle by a handle steering angle sensor, and a steering speed of a front wheel is added in the form of multiplication of the steering speed of the front wheel by a steering control amount in a yaw rate restraining direction. A steering control amount in a yaw rate restraining direction is changed in accordance with a steering speed so that the steering control amount in a yaw rate restraining direction of a steering wheel during a stationary circle turning operation can be made small and an initial rotation property at the abrupt steering time of a front wheel may be improved.

In Japanese Patent Laid-Open Publication No. 60-124572, there is proposed a yaw rate follow controlling system or the like of calculating a target yaw rate from the handle angle and the vehicle speed, and of steering a rear wheel so that the actual yaw rate may follow the target yaw rate. If a route and a direction of a vehicle go wrong because of external disturbance causes such as side wind, bad state road and so on by the yaw rate feedback, any one of systems has an advantage capable of correcting them by the rear wheel steering operation.

The conventional four-wheel steering apparatus constructed as described hereinabove takes more time to decide control gains for the calculation of the rear wheel target steering angle so that the side slip angle may be made smaller for safety because of handle angles, yaw rates, vehicle speeds, which causes a problem that a control system robust, and superior in response with respect to the vehicle speed is hard to design with a simpler construction.

The yaw rate sensor is adapted to remove noises through a filter for use in the inputs of control amount calculation when signals are likely to be influenced by noises so that better precision cannot be directly obtained in first order differential value, two-order differential value and so on. In order to remove noises of differential values of the yaw rate enough not to influence the rear wheel, a cut off frequency of the filter has to be lowered, which cases a defect that the phase delay of the whole yaw rate feedback loop becomes larger, thus deteriorating control performance. Although a differential value is obtained by a difference equation when a sensor which directly obtains a two order differential value does not exist, reliability of high order differential values is considerably lowered.

A stationary target yaw rate becomes also zero when the vehicle speed becomes zero in a target yaw rate following system, which causes a defect that smaller turning property at a starting operation cannot be obtained.

A road surface friction coefficient µ changes by approximately five times between a DRY road face and a WET road face, thus changing the transfer characteristics of a vehicle body. When a target yaw rate tuned on the DRY road face is as it is used on the WET road face, the target yaw rate becomes excessive, thus causing a spinning possibility. When a target yaw rate set on the WET road face is used on the DRY road face, which causes a defect that the yaw rate becomes too small to obtain a satisfactory response.

The same things can be said even about a control gain C. When a control gain C on a DRY road face is used as it is on a WET road face, the following property to the target yaw rate becomes deteriorated. On the other hand, when an optimum control gain C is used on a DRY road face on a WET road, there is a defect that safety is deteriorated.

When a handle steering angle is given considerably, the restraining region of a tire goes outside especially on a low µ road into a non-linear region so as to lower a steering safety. It is necessary to lower a target yaw rate before the restriction of the tire is exceeded.

### SUMMARY OF THE INVENTION

Accordingly, the present invention has been developed with a view to substantially eliminating the above discussed drawbacks inherent in the prior art and has for its essential object to provide an improved rear wheel steering angle controlling apparatus of a four-wheel steering vehicle.

Another important object of the present invention is to provide an improved rear wheel steering angle controlling apparatus of a four-wheel steering vehicle capable of obtaining a superior steering safety of a vehicle where a vehicle body side slip angle is smaller even at a robust and transient time with respect to an unknown variation term.

In accomplishing these and other objects, according to preferred embodiments of the present invention, there is provided a four-wheel steer controlling apparatus, for a vehicle, which is provided with a vehicle speed sensor for detecting the speed of a vehicle, a yaw sensor for detecting a yaw rate, a handle angle sensor for detecting the rotary angle of a handle, a rear wheel steering angle sensor for detecting a rear wheel steering angle, and an electric motor controlling means for steering a rear wheel in accordance with a rear wheel steering angle instruction signal, includes a target yaw rate calculating means for calculating a target yaw rate in accordance with a vehicle speed, a handle angle, an actual yaw rate detected from the yaw rate sensor, a control amount calculating means for calculating a rear wheel steering angle instruction signal value to the above described electric motor controlling means with the use of respective values of a vehicle speed, a yaw rate, a handle angle, and a rear wheel steering angle detected from the sensor so that error with respect to the target yaw rate may become smaller, and which is characterized in that a vehicle speed characteristic estimating means estimates the variation term, with only a vehicle speed change of a vehicle or a vehicle speed change of a vehicle, and a term of an unknown portion of a dynamic variation by a handle operation by the above described front wheel characteristic estimating means provided as a certain control period, so as to calculate a rear wheel steering angle instruction signal value where the actual yaw rate becomes a target yaw rate response. The above described vehicle speed characteristic estimating means and the above described front wheel characteristic estimating means are switched in accordance with a vehicle speed by an estimating rule changing means. The target yaw rate is characterized in having a zero point stable in a transfer function of an error dynamic for determination of characteristics for spreading to a stationary yaw rate value corresponding to a handle angle, a vehicle speed. Each coefficient for determining the behavior of the error dynamics is adapted to be given in a function of the vehicle speed.

The present invention does not require a correct vehicle model in the determination of the control gain by the estimation of unknown terms by model errors of a vehicle and variation in vehicle dynamics characteristics with known terms before microtime or minute period by the above described construction. Robust control system can be obtained by a simple construction with respect to the variations in a system by a vehicle speed and a handle operation. The target raw rate has a zero point stable in the transfer function of the error dynamics for deciding the spreading characteristics in a stationary rate value corresponding to a handle angle, a vehicle speed so that a yaw rate generating effect can be increased at the front wheel steering time, and the side slip angle at a transient time can be reduced by steering the rear wheel in a reverse phase for a moment. The respective coefficients for deciding the behaviors of the error dynamics are made functions of a vehicle speed so that the side slip angle at the transition time in the respective vehicle speed regions can be reduced..

### BRIEF DESCRIPTION OF THE DRAWINGS

These and other objects and features of the present invention will become apparent from the following description of the preferred embodiments thereof with reference to the accompanying drawings, in which:
Fig. 1 is a schematic view showing an apparatus for controlling a rear wheel steering angle of a four-wheel steering vehicle of a first embodiment of the present invention;
Fig. 2 is a schematic view showing an apparatus for controlling a rear wheel steering angle of a four-wheel steering vehicle in accordance with a second embodiment of the present invention;
Fig. 3 is a schematic view showing an apparatus for controlling a rear wheel steering angle of a four-wheel steering vehicle in accordance with a third embodiment of the present invention;
Fig. 4 is a schematic view showing an apparatus for controlling a rear wheel steering angle of a four-wheel steering vehicle in accordance with a fifth embodiment of the present invention;
Fig. 5, (a) and (b), is a graph indicating simulation results of 60 km / h at a vehicle speed in an embodiment of the present invention;
Fig. 6, (a) and (b), is a graph indicating simulation results of 120 km / h at a vehicle speed in an embodiment of the present invention;
Fig. 7, (a) and (b), is a graph indicating simulation results of 250 km / h at a vehicle speed in an embodiment of the present invention;
Fig. 8, (a)and (b), is a characteristic graph indicating the relationship in a frequency response in different vehicle speed regions between a loaded vehicle in an embodiment of the present invention and a conventional vehicle;
Fig. 9 is a characteristic graph of closed loop transfer function when the coefficients of a yaw rate reference model have been changed;
Fig. 10 is a construction view of a sixth embodiment of the present invention;
Fig. 11 is a flowchart indicating the operation of the sixth embodiment of the present invention;
Fig. 12 is a construction view of a seventh embodiment of the present invention;
Fig. 13 is a construction view of an eighth embodiment of the present invention;
Fig. 14 is a construction view of a ninth embodiment of the present invention;
Fig. 15 is a construction view of a tenth embodiment of the present invention; and
Fig. 16 is a construction view of a twelfth embodiment of the present invention.

### DETAILED DESCRIPTION OF EMBODIMENTS OF THE INVENTION

Before the description of the present invention proceeds, it is to be noted that like parts are designated by like reference numerals throughout the accompanying drawings.

### (First Embodiment)

An apparatus for controlling a rear wheel steering angle of a four-wheel steering vehicle in a first embodiment of the present invention will be described in a block diagram. Right, left rear wheels 19 are directly steered with the use of an electric motor controlling means 18. An instruction signal to the electric motor controlling means 18 is calculated with a simple calculation by a control amount calculating means 16 with the use of a vehicle speed characteristic estimating means 17 so that an actual yaw rate may follow a target yaw rate to be calculated by a target yaw rate calculating means 15 with the use of the respective sensor output values of a vehicle speed sensor 11, a yaw rate sensor 12, a handle angle sensor 13, a rear wheel steering angle sensor 14.

The algorithm within the calculator will be described hereinafter.
A vehicle model of two degree freedom system will be represented with a following equation.

### (Equation 1)

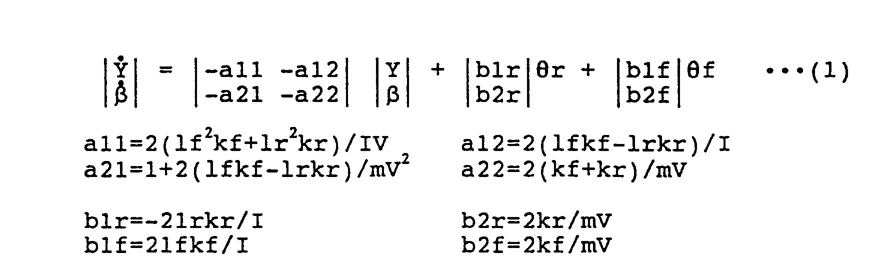

where Y: yaw rate, β: side slip angle, ϑr: rear wheel steering angle, ϑf: front wheel steering angle, lr: distance to rear axle from the center of gravity (CG), lf: distance to front axle from the center of gravity, kr: cornering stiffness at rear wheels, kf: cornering stiffness at front wheels, I: yaw moment of inertia, m: vehicle mass, V: vehicle speed.

Apply the equation (1) to Laplace transformation with a Laplace operation S, and rearrange it in connection with Y,

### (Equation 2)

$\text{Y(s) = Gr(s)ϑr(s) + Gf(s)ϑf(s) (2)}$ 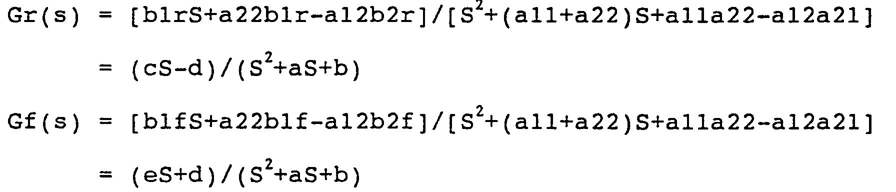
$\text{c = b1r}$ , $\text{e = b1f}$ ,
$\text{d = -a22b1r+a12b2r = a22b1f-a12b2f = 4kfkr(1f+lr)/ImV}$
$\text{a = a11+a22}$ , $\text{b = a11a22-a12a21}$

Expand the above equation, and obtain the following differential equation showing a property until an actual yaw rate in the vehicle is generated by the operation of rear wheel and front wheel.

### (Equation 3)

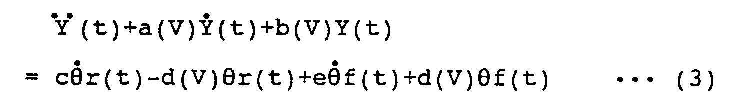

In the above equation, which is a vehicle model subjected to be controlled, coefficients a, b, d are functions of a vehicle speed V. As the ϑf is an unexpected input, it may be considered an external disturbance to a system.
The reference model of the yaw rate which is employed at the time of calculating a target yaw rate by an operation means 15 of target yaw rate is given in the following equation.

### (Equation 4)

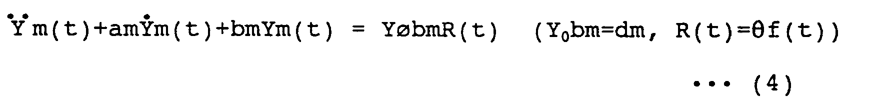

R(t) is a steering angle of front wheel to be calculated by a handle angle detected by a handle angle sensor 13, and Yφ is a stationary yaw rate gain to be guided when $\text{β(S) / ϑf(S) = O}$ (β: side slip angle) is established with two-wheel model, and is expressed in a following equation by a vehicle speed V detected by a vehicle speed sensor 11.

### (Equation 5)

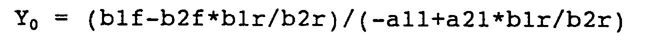

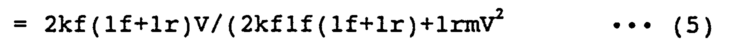

A target yaw rate follow rule is guided with the use of a Time · Delay · Control (hereinafter referred to as TDC) which is one type of adaptive control. There are described fully in Youcef-Toumi, k. and Ito, O., "A Time Delay Controller for Systems with Unknown Dynamics", Trans. ASME, Journal of Dynamic Systems, Measurement and Control, Vol. 112, No.1, pp. 132 through 142, March, 1990.

In a first embodiment of the invention, a term which a coefficient that is a function of a vehicle speed V of the equation (3) is related to is approximated as an unknown term with a known term before microtime L by a vehicle speed characteristic estimating means 17.

### (Equation 6)

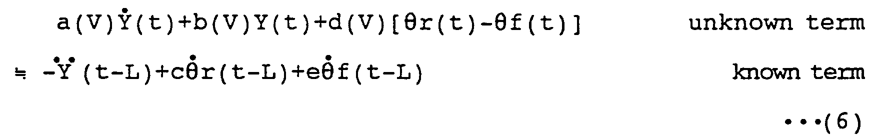

A following equation is obtained by the equations (3), (4) in $\text{e(t) = Ym(t)-Y(t)}$ , wherein e (t) is an error to be caused between an actual yaw rate detected by a yaw rate sensor 12 and a target yaw rate calculated by the target yaw rate operation means 15.

### (Equation 7)

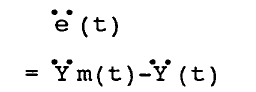

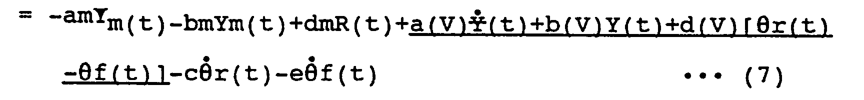

Substitute the equation (6) into a underlined portion of the above equation and rearrange it,

### (Equation 8)

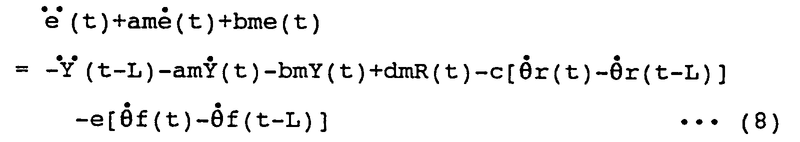

Put right side = Ke(t)

### (Equation 9)

$\text{ë(t)+am} {\text{e}}^{̇} \text{(t)+bme(t) = ke(t) (9)}$

Select k optionally and spreading performance desired into a target yaw rate can be obtained. As k = 0, a rear wheel steering angle ϑr(t) which is a control input is obtained from the equation (8).

A differential value is calculated by a following difference equation as a sampling period L.

### (Equation 10)

A following equation to be employed on an operation means 16 of control amount is guided from the equation (8) by

${\text{ϑ}}^{̇} \text{r(t) = [ϑr(t)-ϑr(t-L)]/L (10)}$

### (Equation 11)

$\text{ϑr(t) = 2ϑr(t-L)-ϑr(t-2L)} \text{-(e/c)[ϑf(t)-2ϑf(t-L)+ϑf(t-2L)]+(Ldm/c)R(t)} \text{-(1/Lc)[Y(t)-2Y(t-L)+Y(t-2L)](am/c)[Y(t)}$ $\text{-Y(t-L)]-(Lbm/c)Y(t) (11)}$

From $\text{R(t)=ϑf(t)}$

### (Equation 12)

$\text{ϑr(t) =2ϑr(t-L)-ϑr(t-2L)+(Ldm/c-e/c)ϑf(t)+(2e/c)ϑf(t-L)} \text{-(e/c)ϑf(t-2L)-(1/Lc+am/c+Lbm/c)Y(t)} \text{+(2/Lc+am/c)Y(t-L)-(1/Lc)Y(t-2L) (12)}$

The front wheel steering angle ϑf is given by a following equation by a handle steering angle ϑH.
$\text{ϑf(t) = ϑH(t) / Ns}$ Ns: steering gear ratio
The above equation is a control input to a motor control means 18 when a term where a vehicle dynamic characteristics are varied by the vehicle speed by a vehicle speed property estimating means 17, i.e., the first embodiment of the present invention is estimated by the equation (6). Superior control result superior even with respect to the vehicle speed variation and following an actual yaw rate to a target yaw rate which is given by a target yaw rate operation means 15, i.e., the equations (4) and (5) is obtained by a control amount operation means 16 without preservation, as a map, in a large quantity of gain corresponding to the vehicle speed by the use of the equation (12). Stable characteristics are shown especially in a high speed region.

The present embodiment will be as follows when the error dynamics before microtime L is taken into consideration.

The error dynamics before microtime L is given in a following equation from the equation (7). (Equation 13) 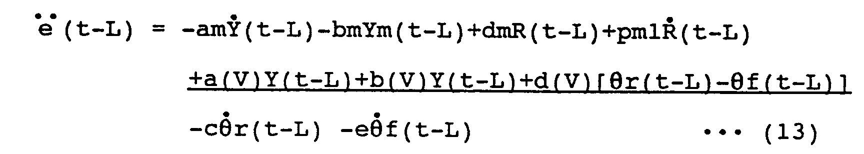
Substitute the equations (3), (6) before microtime L into the underlined portion of the above equation and subtract the difference of the equations (7), (8) for rearrangement thereof,

### (Equation 14)

$\text{Δë(t)+amΔ} {\text{e}}^{̇} \text{(t)+bmΔe(t)} \text{= -amΔ} {\text{Y}}^{̇} \text{(t)-bmΔY(t)+dmΔR(t)+pm1Δ} {\text{R}}^{̇} \text{(t)-cΔ} {\text{ϑ}}^{̇} \text{r(t)-eΔ} {\text{ϑ}}^{̇} \text{f(t) (14)}$

in right side = k1Δe(t)+k2Δe(t)

### (Equation 15)

$\text{Δë(t) + amΔ} {\text{e}}^{̇} \text{(t) + bmΔe(t) = k1Δe(t) + k2Δ} {\text{e}}^{̇} \text{(t) (15)}$

Select k1, k2 optionally, and the spreading performance to be desired to Δe(t) → 0 can be obtained. A rear wheel steering angle ϑr(t) which is a control input that becomes e(t) → 0 is obtained as k1, k2 = 0.

A control rule which becomes Δe(t) → 0 is represented by a next equation.

### (Equation 16)

${\text{}}^{\text{cΔϑ}} \text{r(t) = -eΔ} {\text{ϑ}}^{̇} \text{f(t)-amΔ} {\text{Y}}^{̇} \text{(t)-bmΔY(t)+dmΔR(t)+pm1Δ} {\text{R}}^{̇} \text{(t) (16)}$

A control rule which becomes e(t) → 0 is expressed by a following equation by

### (Equation 17)

$\text{c} {\text{ϑ}}^{̇} \text{r(t) = -e} {\text{ϑ}}^{̇} \text{f(t)-am} {\text{γ}}^{̇} \text{(t)-bmγ(t)+dmR(t)+pm1Δ} {\text{R}}^{̇} \text{(t) (17)}$

A differential value is calculated by a following difference equation with a sampling period being provided as L.

### (Equation 18)

${\text{ϑ}}^{̇} \text{r(t) = [ϑr(t)-ϑr(t-L)]/L (18)}$

A following equation is guided from a (12) equation.
From $\text{R(t) = ϑf(t)}$ ,

### (Equation 19)

$\text{ϑr(t) = ϑr(t-L)-(e/c)[ϑf(t)-ϑf(t-L)]+(Ldm/c)ϑf(t)} \text{+(pm1/c)[ϑf(t)-ϑf(t-L)]-(am/c)[Y(t)-Y(t-L)]} \text{-(Lbm/c)Y(t) (19)}$

A front wheel steering angle ϑf is given by a following equation from a handle steering angle ϑH.
$\text{ϑf(t) = ϑH(t) / Ns}$ Ns: steering gear ratio
The above equation is a control input when a two-order differential value of a yaw rate is not used from the first embodiment of the invention. A control which can follow the target yaw rate with better precision can be realized without the use of the yaw rate two-story differential value which is low in reliability can be realized by the use of the equation (19).

### (Second Embodiment)

Algorithm in a second embodiment will be described hereinafter.

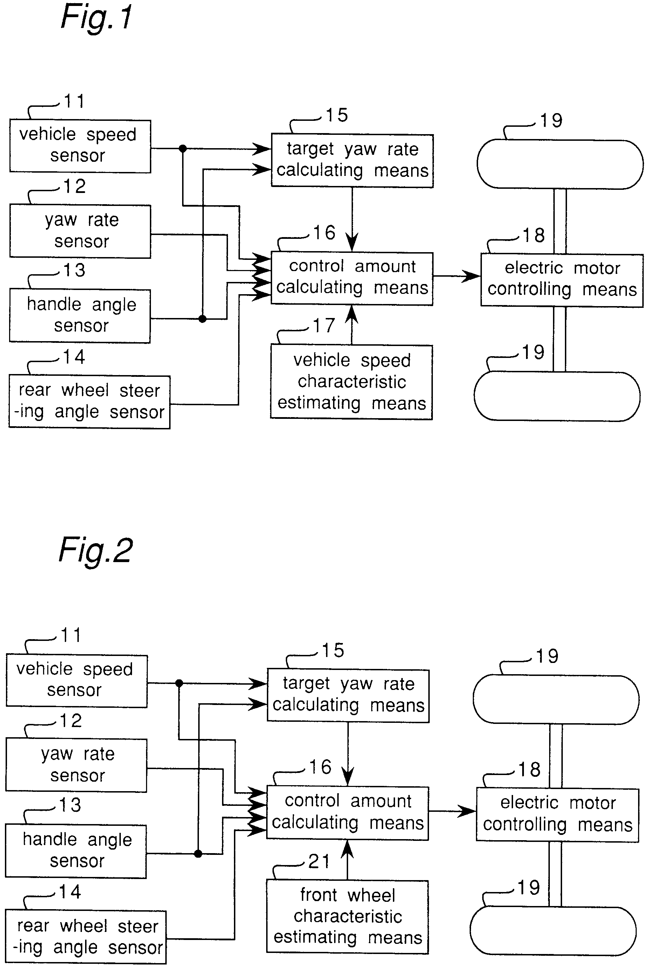

Fig. 2 shows a block diagram of a rear wheel steering angle controlling apparatus of a four-wheel steering vehicle in the second embodiment of the invention.

Right, left rear wheels 19 are directly steered with the use of an electric motor controlling means 18. An instruction signal to the electric motor controlling means 18 is calculated with a simple calculation by a control amount calculating means 16 with the use of a front wheel characteristic estimating means 21 so that an actual yaw rate may follow a target yaw rate to be calculated by a target yaw rate calculating means 15 with the use of the respective sensor output values of a vehicle speed sensor 11, a yaw rate sensor 12, a handle angle sensor 13, a rear wheel steering angle sensor 14.

In a second embodiment of the invention, as it is considered that the front wheel steering angle ϑf by a handle steering is an external disturbance to the control system because of an un-expected input to the control system, a term of ϑf of the equation (3) and a term which a coefficient that is a function of a vehicle speed V is related to are made unknown terms and are approximated with a known term before microtime L by a front wheel characteristic estimating means 21. The unknown terms can be expressed by a following equation.

### (Equation 20)

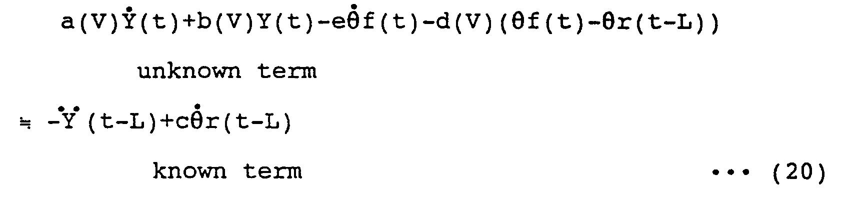

A following equation is obtained by the equations (3), (4), (20) in $\text{e(t) = Ym(t)-Y(t)}$

### (Equation 21)

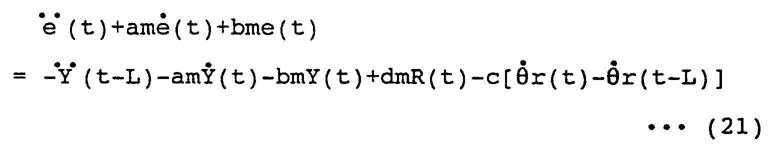

(A following equation is obtained in a reght side = φ)

### (Equation 22)

$\text{ϑr(t) = 2ϑr(t-L) - ϑr(t-2L) + {Ldm/c}R(t) - {1/(Lc)}[Y(t)} \text{- 2Y(t-L) + Y(t-2L)] - {am/c}[Y(t) - Y(t-L)]-} \text{{Lbm/c}Y(t) (22)}$

From $\text{R(t) = ϑf(t)}$

### (Equation 23)

$\text{ϑr(t) = 2ϑr(t-L)-ϑr(t-2L)+{Ldm/c}ϑf(t)-{1/(Lc)} \text{+am/c+Lbm/c}Y(t)+{2/(Lc)+am/c}Y(t-L)} \text{-{1/(Lc)}Y(t-2L) (23)}$

A front wheel steering angle ϑf is given by a following equation from a handle steering angle ϑH.

$\text{ϑf(t) = ϑH(t)/Ns}$ Ns: steering gear ratio
A handle steering angle input is also considered external disturbances by a second embodiment of the invention. The above equation is a control input when the vehicle dynamic characteristic variation terms by a handle steering angle input are estimated by an front wheel property estimating means 21, i.e., the equation (20). A control system capable of high speed response by a simple control rule can be constructed by the use of the equation (23) with a control amount operation means 16. Especially superior characteristics are shown in a low vehicle speed region.

### (Third Embodiment)

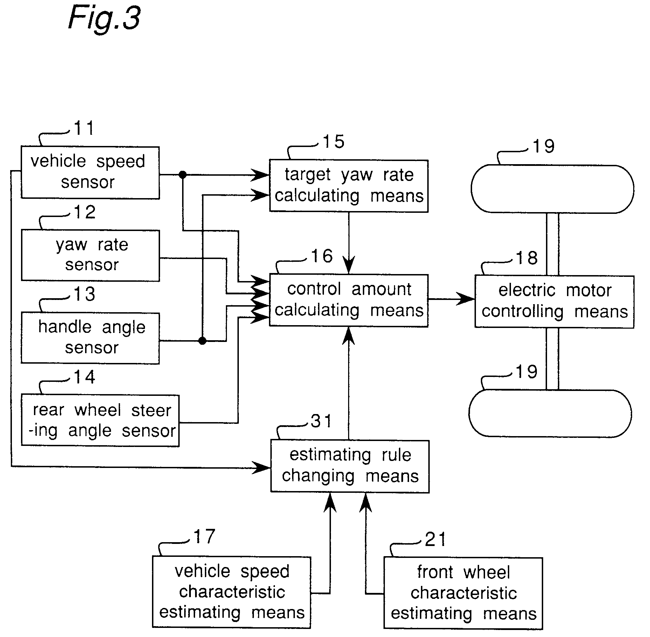

Fig. 3 shows as block diagram of an apparatus for controlling the rear wheel steering angle of a four-wheel steering vehicle in a third embodiment of the present invention. Right, left rear wheels 19 are directly steered with the use of an electric motor controlling means 18. A vehicle speed characteristic estimating means 17 and a front wheel characteristic estimating means 21 are switched in accordance with a vehicle speed by an estimating rule changing means 31 so that an instruction signal to the electric motor controlling means 18 is calculated with a simple calculation by a control amount calculating means 16 so that an actual yaw rate may follow a target yaw rate to be calculated by a target yaw rate calculating means 15 with the use of the respective sensor output values of a vehicle speed sensor 11, a yaw rate sensor 12, a handle angle sensor 13, a rear wheel steering angle sensor 14.

In the third embodiment of the present invention, the control input to the rear wheel is calculated with the use of the front wheel characteristic estimating means as the unknown characteristic estimating rule in a low vehicle speed region and with the use of a vehicle speed characteristic estimating means in a high vehicle speed region. Thus, a stable response capable of low speed region through high speed region can be obtained.

### (Fourth Embodiment)

A control rule when a stable zero point is given to a yaw rate model in a fourth embodiment of the present invention will be described hereinafter.

A reference model of a yaw rate when a zero point is given as a phase advancing element in the target yaw rate operation means 15 is given in a following equation.

### (Equation 24)

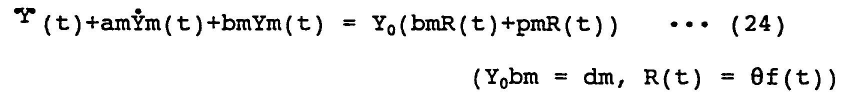

In the equation (3), the unknown term and the known term can be divided in two method of (6), (20) equations as in described hereinabove. A control rule when the equation (20) in the second embodiment of the present invention is shown hereinafter as one example.

### (Equation 25)

$\text{ϑr(t) = 2ϑr(t-L)-ϑr(t-2L)+{Ldm/c}R(t)+{Y₀pm/c}} \text{[R(t)-R(t-L]-{1/(Lc)}[Y(t)-2Y(t-L)+Y(t-2L)]} \text{-{am/c}[Y(t)-Y(t-L)]-{Lbm/c}Y(t) (25)}$

From $\text{R(t) = ϑf(t)}$

### (Equation 26)

$\text{ϑr(t) = 2ϑr(t-L)-ϑr(t-2L)+{(Ldm+Y₀pm)/c}ϑf(t)} \text{-{Y₀pm/c}ϑf(t-L)-{1/(Lc)+am/c+Lbm/c}Y(t)} \text{+{2/(Lc)+am/c}Y(t-L)-{1/(Lc)}Y(t-2L) (26)}$

The front wheel steering angle ϑf is given in a following equation by a handle steering angle ϑH.

$\text{ϑf(t) = ϑH(t)/Ns}$ Ns: steering gear ratio
The above equation is a control input when an unknown term has been estimated by the front wheel characteristic estimating means 21 when a zero point (pm>0) has bee given to a yaw rate normal model by the target yaw rate operation means 15 by a fourth embodiment of the present invention. By the use of pm is the equation (26) with a control input amount to be calculated by the control amount operation means 16 in the case of estimating unknown term by the front wheel property estimating means 21, the components of rear wheel steering angle steered in a reverse phase is calculated momentarily when rotating the handle, thereby constituting a control system capable of reducing a side slip angle even at a transition time.

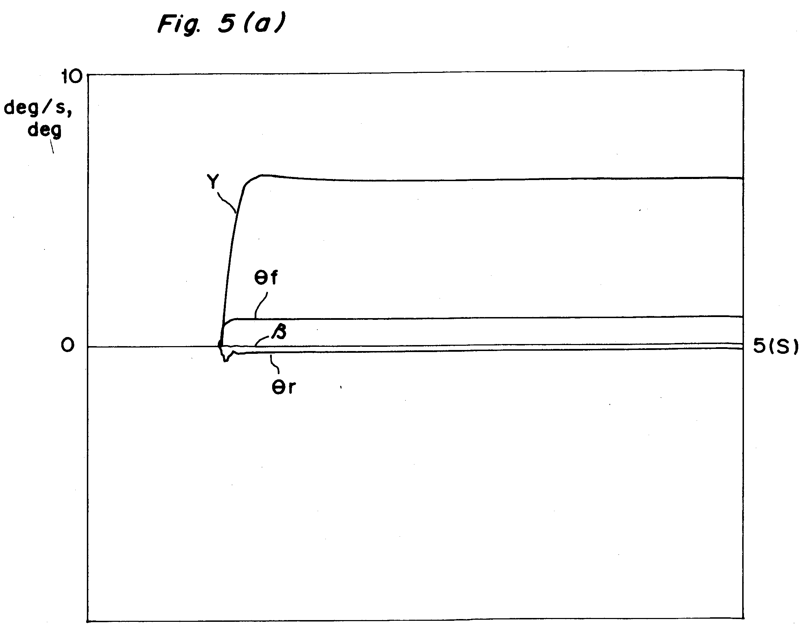

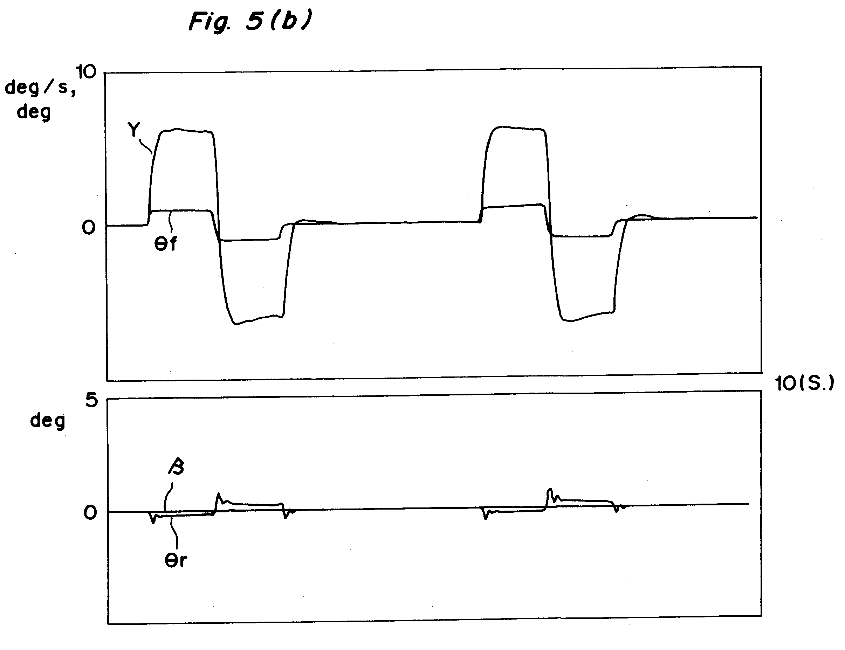

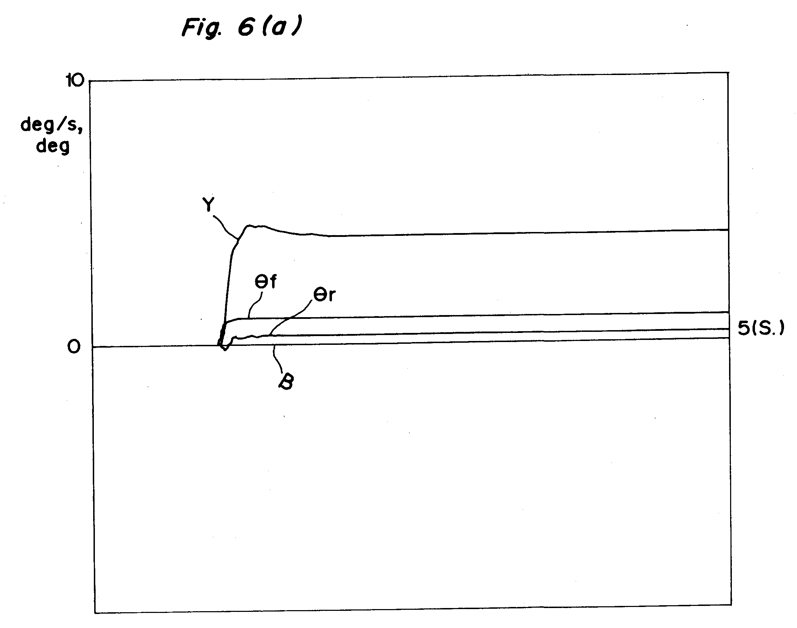

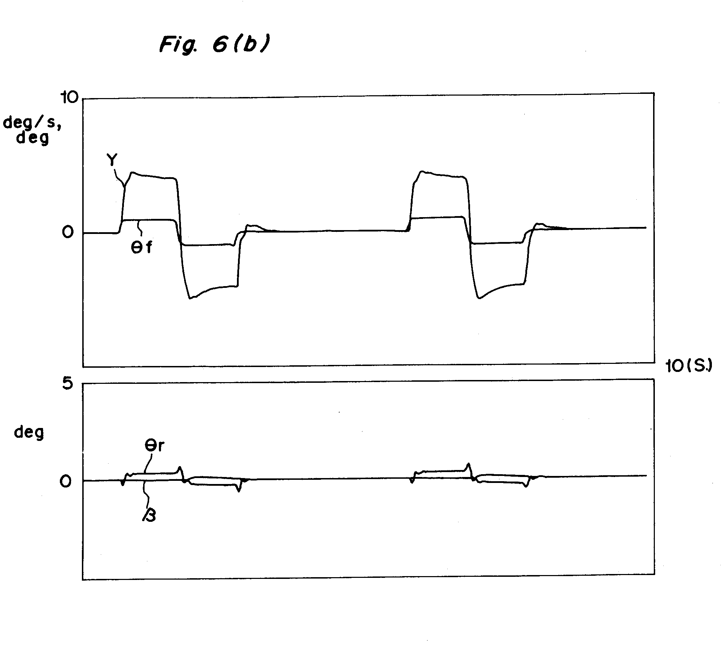

A circular turning, namely, a step response of the front wheel steering angle and a lane change, namely, simulation results of a rectangular wave response of the front wheel steering angle ϑf are shown in Fig. 5, (a) and (b), 6, (a) and (b), 7, (a) and (b). The graphs are control results at V = 60km / h, 120km / h, 250km / h. A control period is L = 0.02 (sec), coefficients of a target mode are am = 20, bm = 100, pm = 15. These graphs 5(a), 6(a), 7(a) are four seconds' simulation results when the front wheel steering angle has been steered by 1 (degree) in step after one second. In each variable, an ordinate is 10 (degree) at maximum with respect to an angle, and is 10 (deg / Sec) at maximum with respect to a yaw rate. Fig. 5(b), 6(b), 7(b) are response waveforms when a front wheel steering angle has been steered by ±1 (degree) at a period of 0.5Hz, and 10 seconds' simulation results. An ordinate in an upper graph is 10 in maximum value and an ordinate in a lower graph is 5 in maximum value.

An equation obtained by a two-wheel model and added dead time is used as a simulation model. Namely, a transfer function represented by a following equation is used. (Equation 27) 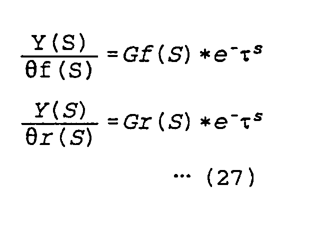
Here, a useless time τ is expressed by τ = 0.015 (sec).

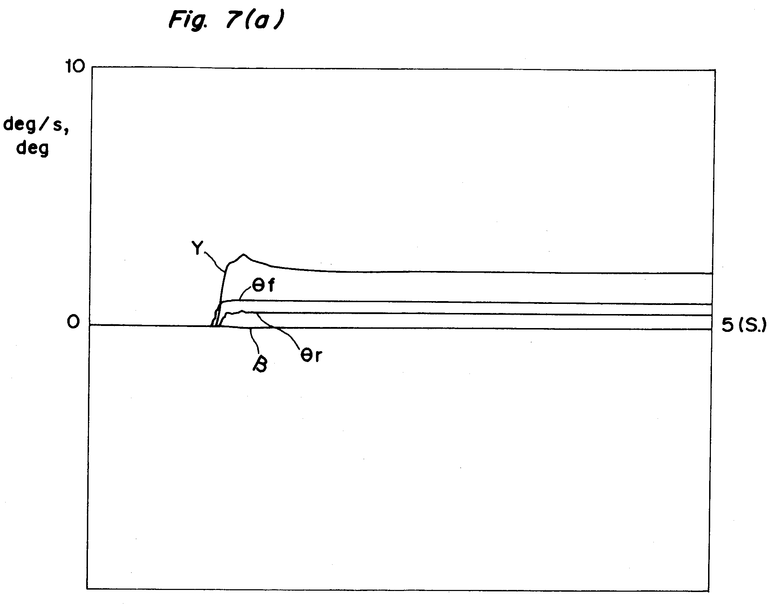

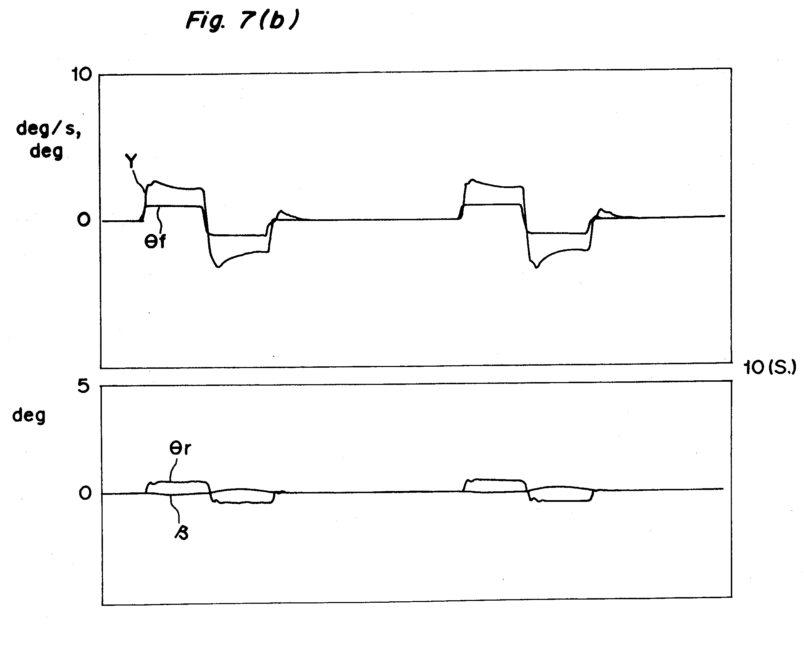

With the arrangement of Figs. 5 to 7, it can be zero for the side slip angle β at the normal time, and, even in the transitional period, the building up of real yaw rate Y is accelerated by the component of immediate reverse phase to follow fast to the target yaw rate of which side slip angle is zero, thereby to render to prevent from generating the side slip angle. Since the raising up of yaw rate is fast in the simulation for the equation of V = 250 Km/h of Fig. 7, the yaw rate component is adapted to cancel the reverse phase component, and the rear wheel ϑr does not become the reverse phase to follow the target yew rate. In either of the cases, it is possible to get a control property having side slip angle being zero by means of rear wheel steering in smooth, and it can be confirmed it is a control system being robust against the vehicle speed.

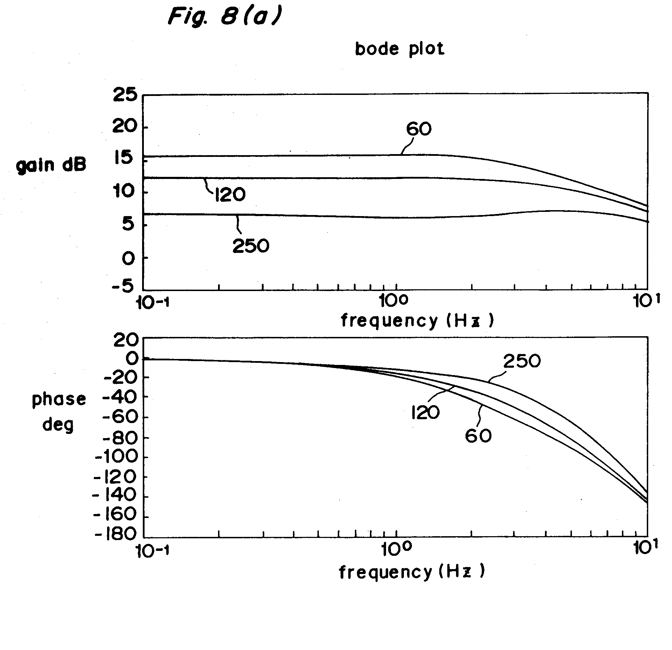

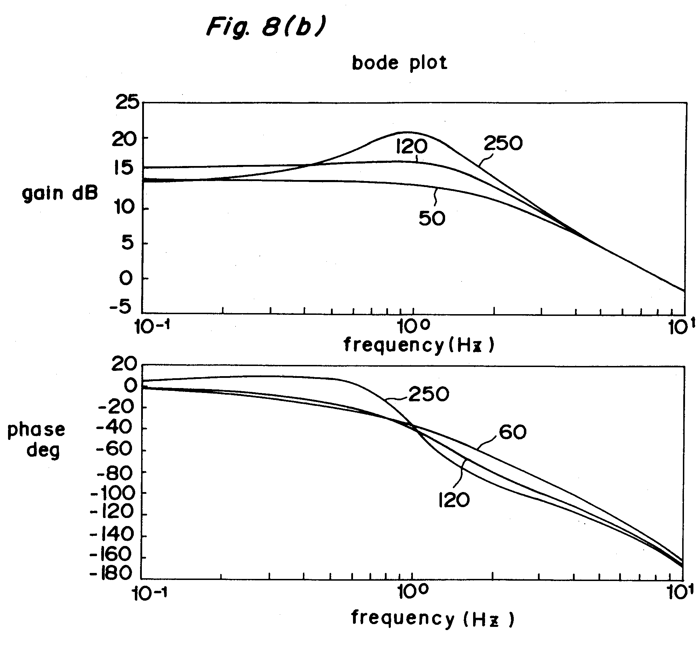

Figs. 8 (a) and (b) show frequency response results at the vehicle speed V = 60 km/h, 120 km/h, 250 km/h between the front wheel steering angle through the yaw rate when a control rule by the embodiment of the present invention is used, and results in a conventional vehicle. The characteristics shown in Fig. 8 (a) are characteristics in the conventional vehicle (2WS), while the characteristics shown in Fig. 8 (b) are frequency response results of vehicle in the case of employing the control rule by the fourth embodiment of the present invention. With the present invention it can be improved the phase delay, and set up to depress the peak of gain at the high speed, thereby to improve the stability at high speed. Also, even if the gain is falling down less than 1 Hz, it can be possible to make it flat up to the high frequency to be able to improve the operationability at the time of emergency evacuation.

In addition, with the target yaw rate operation means 15 in equation (24), by giving the parameters am, bm, pm of transfer function for generating the target yaw rate with the function of condition variations in vehicle it can be possible to set up for the frequency response property at optional amount, for instance, it can be possible to obtain a stable control property in the whole range of vehicle speed by setting up the value Pm in the relationship with the vehicle speed becoming large at the low speed and small at the high speed.

### (Fifth Embodiment)

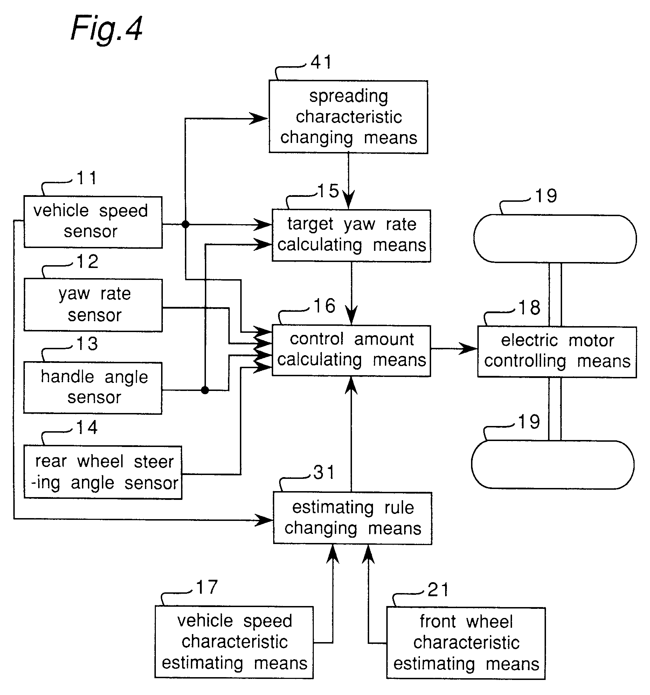

Fig. 4 shows a block diagram of an apparatus for controlling the rear wheel steering angle of a four-wheel steering vehicle in a fifth embodiment of the present invention. Right, left rear wheels 19 are directly steered with the use of an electric motor controlling means 18. A vehicle speed characteristic estimating means 17 and a front wheel characteristic estimating means 21 are switched in accordance with the vehicle speed by an estimating rule changing means 31 so that an instruction signal to the electric motor controlling means 18 is calculated with a simple calculation by a control amount calculating means 16 so that an actual yaw rate may follow a target yaw rate to be calculated by a target yaw rate calculating means 15 where a coefficient is given by a spreading characteristic changing means 41 with the use of the respective sensor output values of a vehicle speed sensor 11, a yaw rate sensor 12, a handle angle sensor 13, a rear wheel steering angle sensor 14.

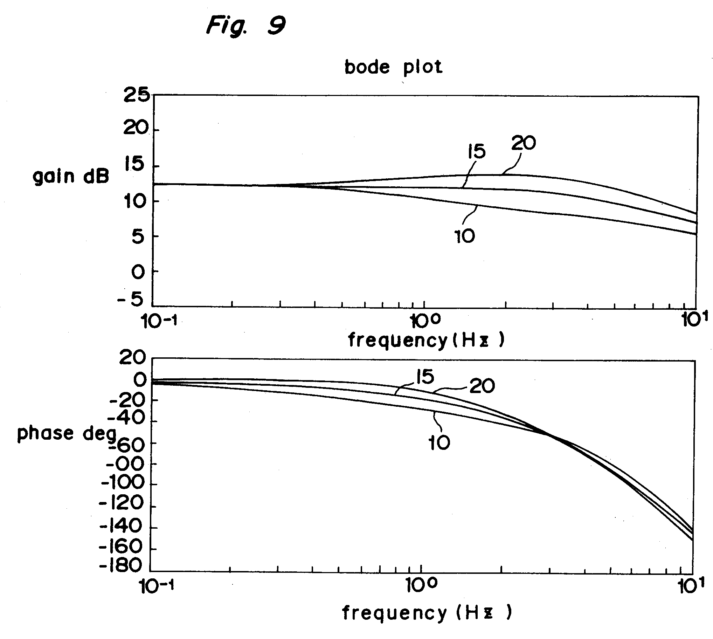

In the fifth embodiment of the present invention, respective coefficients of a yaw rate reference model to be given by the equation (24) are changed in accordance with a vehicle speed by a spreading characteristic changing means 41 so that the response property of the vehicle is improved, and the side slip angle at the transition time can be reduced. Fig. 9 shows a closed loop transfer characteristic between the front wheel steering angle and the yaw rate when pm has been changed as one example. Results are provided at control period L = 0.02 sec, am = 20, bm = 100, a vehicle speed V = 120 km / h. Since the control characteristics of the vehicle changes with change in the pm, the pm is given with a map corresponding to the vehicle speed so that a superior control performance corresponding to the vehicle speed can be obtained.

Although a control system is designed with the use of only a reference model of a yaw rate in the present embodiment, a reference model of a side slip angle β may be added. A similar designing can be effected with the use of the reference model of the side slip angle. Although a differential value of a yaw rate value or the like is given by a difference equation before one sampling, a difference equation before two samplings or more will do. A direct differential value measured by a sensor may be used. In the present embodiment, although a secondary delay model and a secondary delay + a primary advance model are used for a yaw rate example model, a primary delay model, a secondary delay + a secondary advance model or the like may be used. Although only the pm is given as a function of a vehicle speed in a fourth embodiment of the present invention, other coefficients am, bm, dm may be given with the functions of the vehicle speed.

### (Sixth Embodiment)

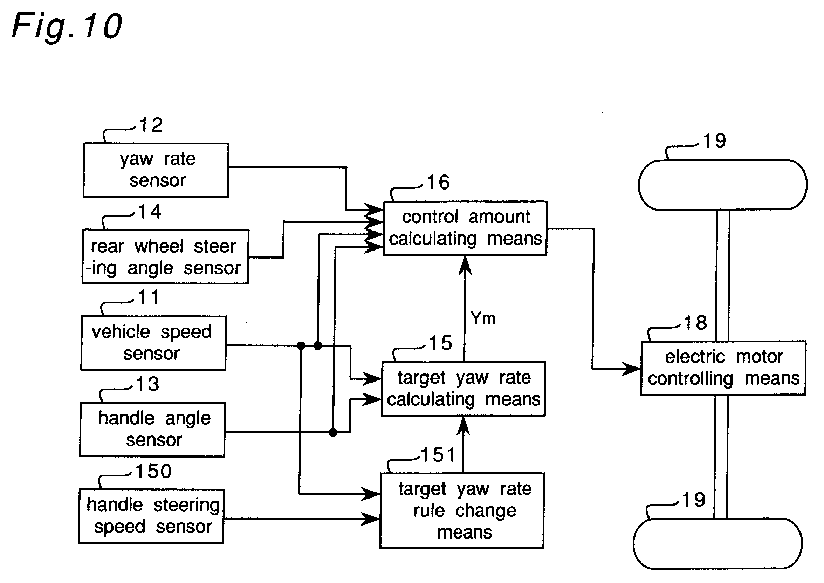

A sixth embodiment of the present invention will be described hereinafter. Fig. 10 shows a block diagram of an apparatus for controlling the rear wheel steering angle of a four-wheel steering vehicle of the present invention. Right, left rear wheels 19 are directly steered with the use of an electric motor controlling means 18. An instruction signal to the electric motor controlling means 18 is calculated with a simple calculation by a control amount calculating means 16 so that an actual yaw rate may follow a target yaw rate to be calculated by a target yaw rate calculating means 15 with the use of the respective sensor output values of a vehicle speed sensor 11, a yaw rate sensor 12, a handle angle sensor 13, a rear wheel steering angle sensor 14. The calculation rule to be used by the above described target yaw rate calculating means 15 is changes in accordance with the value of a handle steering angle speed which is an output value of the handle steering angle speed sensor 150 by a target yaw rate rule changing means 151.

The algorithm within the calculator will be described hereinafter. A vehicle model of two degree freedom system will be represented with a following equation.

### (Equation 28)

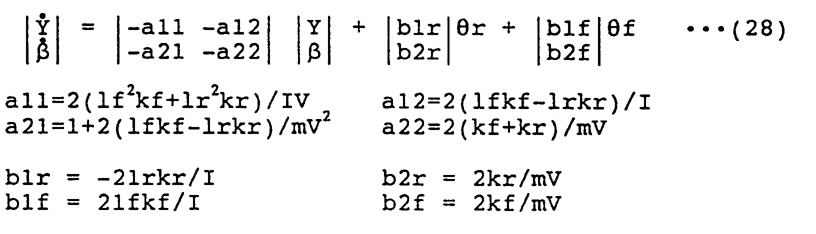

where Y: yaw rate, β: side slip angle, ϑr: rear wheel steering angle, ϑf: front wheel steering angle, lr: distance to rear axle from the center of gravity (CG), lf: distance to front axle from the center of gravity, kr: cornering stiffness at rear wheels, kf: cornering stiffness at front wheels, I: yaw moment of inertia, m: vehicle mass, V: vehicle speed.
From the equation (28),

### (Equation 29)

$\text{Y(s) = Gr(s)ϑr(s)+Gf(s)ϑf(s) (29)}$
$\text{Gr(s) = [b1rS+a22b1r-a12b2r]/[S²+(all+a22)S}$
$\text{+alla22-a12a21]}$
$\text{= (cS-d)/(S²+aS+b)}$
$\text{Gf(s) = [b1fS+a22b1f-a12b2f]/[S²+(all+a22)S}$
$\text{+alla22-a12a21]}$
$\text{= (eS+d)/(S²+aS+b)}$
$\text{c = b1r}$ , $\text{e = b1f}$ ,
$\text{d = -a22b1r+a12b2r = a22b1f-a12b2f = 4kfkr(1f+1r)/(ImV)}$
$\text{a = a11+a22}$ , $\text{b = a11a22-a12a21}$

Expand the above equation,

### (Equation 30)

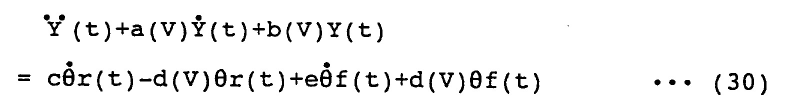

In the above equation, coefficients a, b, d are functions of a vehicle speed V. As the ϑf is an unexpected input, it may be considered an external disturbance to a system.
A reference model of a target yaw rate to be changed by a target yaw rate rule changing means 151 is given, as one example, by two equations of a reference model when the following zero point is not given, and a reference model when a zero point is given as a phase advance element. A reference model when a zero point is not provided is given by a following equation.

### (Equation 31)

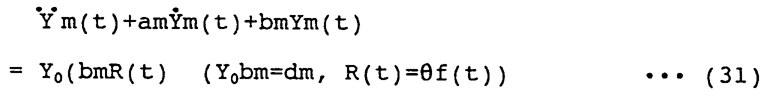

A transfer function F(S) where a zero point does not exist is given by a following equation.

### (Equation 32)

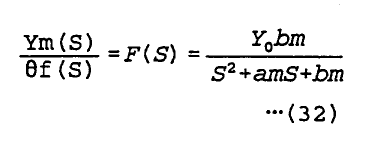

A reference model of a yaw rate when a zero point is given as a phase advance element is given by a following equation.

### (Equation 33)

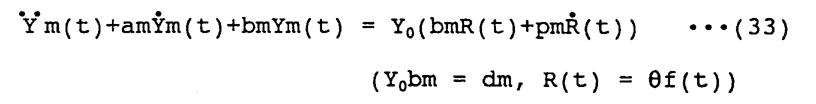

A transfer function G(S) having a zero point is given by a following equation.

### (Equation 34)

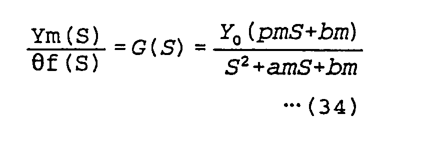

Y₀ is a stationary yaw rate gain to be guided when $\text{β(S) / ϑf(S) = O}$ (β: side slip angle) is provided with a two-wheel model and is expressed by a following equation. (Equation 35) 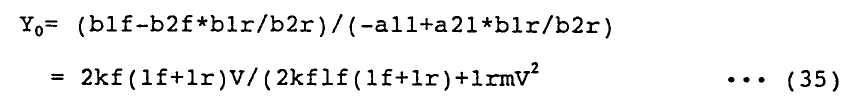
A term of ϑf of the equation (30) and a term which a coefficient that is a function of a vehicle speed V is related to is provided as unknown terms, and are approximated with a known term before a microtime L. The unknown terms can be expressed with a following equation.

### (Equation 36)

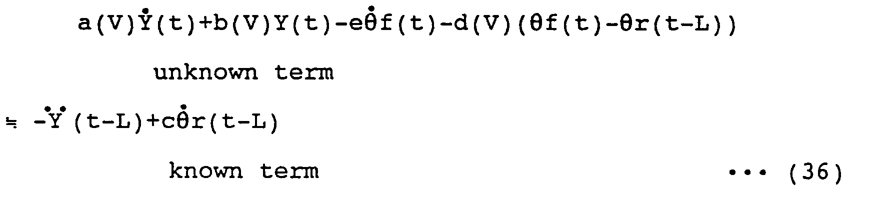

A control rule when a zero point does not exist in a reference model is guided.

A following equation is obtained from equations (30), (31), (36) when a deviation between a target yaw rate and a real yaw rate is put into $\text{e(t) = Ym(t) - Y(t)}$ .

### (Equation 37)

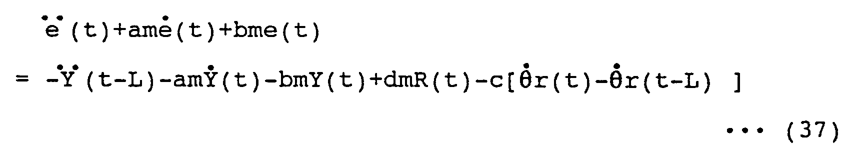

In a right side = K1e(t), k2ë(t)

### (Equation 38)

$\text{ë(t)+am} {\text{e}}^{̇} \text{(t)+bme(t) = ke(t)}$

Select k1, k2 optionally and a spreading performance to be desired into a target yaw rate can be obtained. As k1, k2=φ, a rear-wheel steering angle ϑr(t) which is a control input is obtained from the equation (8).

A differential value is calculated by a following difference equation with a sampling period being provided as L.

### (Equation 39)

${\text{ϑ}}^{̇} \text{r(t) = [ϑr(t)-ϑr(t-L)]/L (39)}$

A following equation is obtained in a right side = 0.

### (Equation 40)

$\text{ϑr(t) = 2ϑr(t-L)-ϑr(t-2L)+{Ldm/c}R(t)-{1/(Lc)}[Y(t)} \text{-2Y(t-L)+Y(t-2L)]-{am/c}[Y(t)-Y(t-L)]} \text{-{Lbm/c}Y(t) (40)}$

From $\text{R(t)=ϑf(t)}$

### (Equation 41)

$\text{ϑr(t) = 2ϑr(t-L)-ϑr(t-2L)+{Ldm/c}ϑf(t)} \text{-{1/(Lc)+am/c+Lbm/c}Y(t)+{2/(Lc)+am/c}Y(t-L)} \text{-{1/(Lc)}Y(t-2L) (41)}$

A control rule when a zero point exists in a reference model of a target yaw rate is also given by a following equation from the equations (30), (34), (36).

### (Equation 42)

$\text{ϑr(t) = 2ϑr(t-L)-ϑr(t-2L)+{Ldm/c}R(t)+{Y₀pm/c}} \text{[R(t)-R(t-L)]-{1/(Lc)}[Y(t)-2Y(t-L)+Y(t-2L)]} \text{-{am/c}[Y(t)-Y(t-L)]-{Lbm/c}Y(t) (42)}$

From $\text{R(t) = ϑf(t)}$

### (Equation 43)

$\text{ϑr(t) = 2ϑr(t-L)-ϑr(t-2L)+{(Ldm+Y₀pm)/c}ϑf(t)} \text{-{Y₀pm/c}ϑf(t-L)-{1/(Lc)+am/c+Lbm/c}Y(t)} \text{+{2/(Lc)+am/c}Y(t-L)-{1/(Lc)}Y(t-2L) (43)}$

The front wheel steering angle ϑf is given by a following equation from a handle steering angle ϑH.
$\text{ϑf(t) = ϑH(t) / Ns}$ Ns: steering gear ratio
The equations (41), (43) are switched with the values of a handle steering angle speed and a vehicle speed by a target yaw rate rule changing means of the present invention. For example, when a handle steering angle speed is small, namely, in a slower handle operation, a target rear wheel steering angle is calculated with a control rule with a reference model where a zero point of the equation (41) is not provided. When a handle steering angle speed is higher, namely, when a handle is quickly manipulated, a target yaw rate is followed which is calculated with a reference model having a zero point of the equation (43), namely, having a phase advance element, which causes an advantage that a target yaw rate at a transition time is made larger equivalently to accelerate the rasing up of the actual yaw rate.

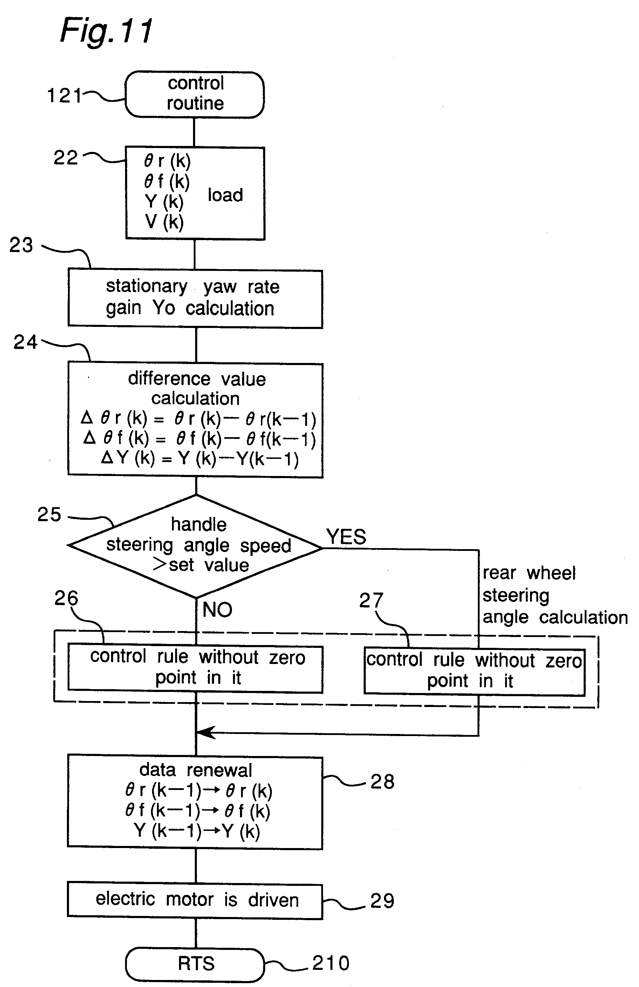

A control flow in a present embodiment is shown in Fig. 11.

A control routine of a step 121 is carried out for each control period. At a step 22, a rear wheel steering angle ϑr, a front wheel steering angle ϑf, a real yaw rate Y, a vehicle speed V are loaded and a stationary yaw rate gain Y₀ corresponding to the vehicle speed is calculated by a step 23. A difference value of each data to be used by a control rule calculation is calculated by a step 24. When the handle steering angle speed is larger than a certain set value by a step 25, namely, a quick handle steering operation is effected, a target rear wheel angle is calculated with the use of a control rule where a zero point exists at a step 27. On the other hand, when the handle steering speed is smaller than the set value, namely, when a normal handle steering operation is effected, a rear wheel steering angle is calculated with the use of a control rule where a zero point does not exist at a step 26. The respective data are renewed at a step 28. An electric motor is driven so that the rear wheel steering angle may become a calculated target rear wheel steering angle at a step 29. A control routine is finished by a step 210.

A reference model corresponding to a handle steering angle speed is given so that a smooth stable traveling control operation can be effected at a normal handle steering time, and an obstruction can be avoided safely by making a reverse phase component larger in emergency steering operations such as collision avoidance and so on and by improving the rotation property.

Although two reference models are adapted to be switched in accordance with a handle steering speed in a target yaw rate rule changing means in the present embodiment, the zero point of the reference model may be changed in accordance with the handle steering speed. Make the value of the zero point larger also if the handle steering angle speed is larger. Make the value of the zero point smaller also if the handle steering angle speed is smaller. Change the reference model of a target yaw rate, considering the value of the handle steering angle in the target yaw rate rule changing means. Although a secondary delay model and a secondary delay + a primary advance model are used in the yaw rate reference model in the present embodiment, the model of other next order may be used.

### (Seventh Embodiment)

A seventh embodiment of the present invention will be described hereinafter.

When signals of the yaw rate sensor itself are likely to be influenced with noises even in either of the above described embodiments, and a first order differential value, a second-story differential value and so on cannot be directly obtained with better accuracy, the noises are removed through a filter for use in inputs of the control amount calculation. In order to remove noises of differential values of the yaw rate enough not to be influenced upon the rear wheel, a cut off frequency of the filter has to be lowered, which causes a problem that the phase delay of the whole yaw rate feedback loop becomes larger, thus deteriorating the control performance. When a sensor for directly obtaining a two-story differential value does not exist, the differential value is obtained by a difference equation. The reliability of a high order differential value is considerably lowered by a way of obtaining the calculation period. The present embodiment settles such a problem.

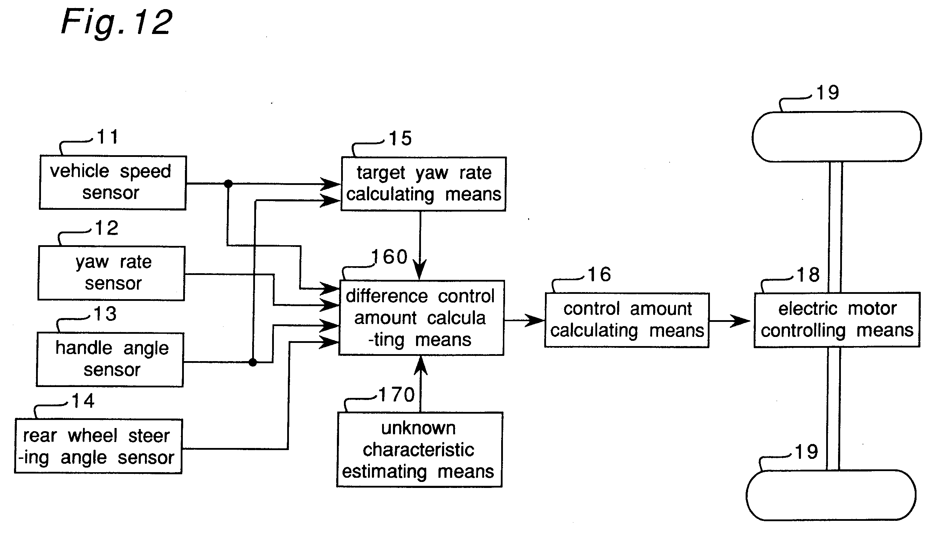

Fig. 12 shows a block diagram of the present embodiment. It is to be noted that like parts are designated by like reference numerals throughout the accompanying drawings.

The algorithm within the calculator of the present embodiment will be described hereinafter. A vehicle model of two freedom degree system will be represented with a following equation. (Equation 44) 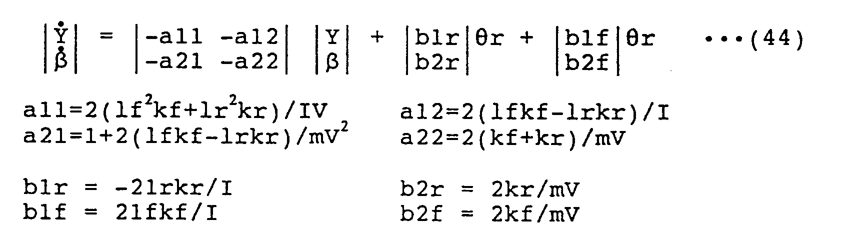
where Y: yaw rate, β: side slip angle, ϑr: rear wheel steering angle, ϑf: front wheel steering angle, lr: distance to rear axle from the center of gravity (CG), lf: distance to front axle from the center of gravity, kr: cornering stiffness at rear wheels, kf: cornering stiffness at front wheels, I: yaw moment of inertia, m: vehicle mass, V: vehicle speed.
From the equation (44),

### (Equation 45)

$\text{Y(s) = Gr(s)ϑr(s) + Gf(s)ϑf(s) (45)}$ 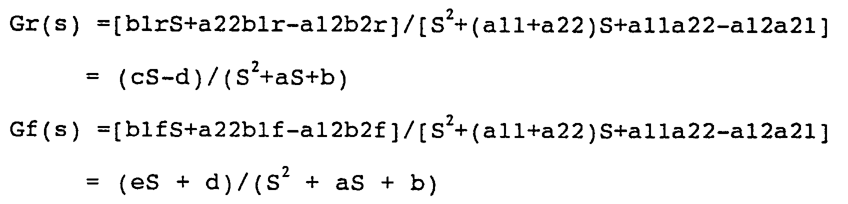
$\text{c = b1r}$ , $\text{e = b1f}$ ,
$\text{d = -a22b1r+a12b2r = a22b1f-a12b2f = 4kfkr(1f+1r)/(ImV)}$
$\text{a = a11+a22}$ , $\text{b = a11a22-a12a21}$

Expand the above equation,

### (Equation 46)

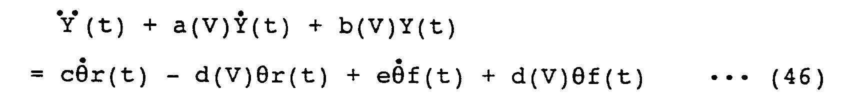

In the above equation, coefficients a, b, d are functions of a vehicle speed V. As the ϑf is an unexpected input, it may be considered an external disturbance to a system.
A reference model of the yaw rate will be given by a following equation.

### (Equation 47)

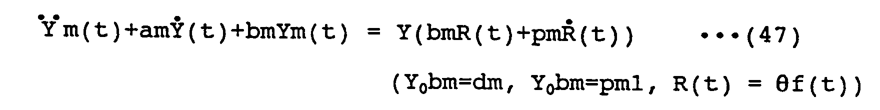

Y₀ is a stationary yaw rate gain to be guided when $\text{β (S) / ϑf(S) = 0}$ (β: side slipping angle) is provided with a two-wheel model and is expressed by a following equation.

### (Equation 48)

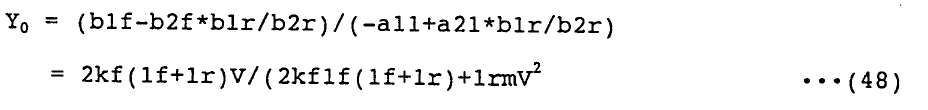

In the present embodiment, a term which a coefficient that is a function of a vehicle speed V of the equation (46) is related to is approximated as an unknown term with a known term before a microtime L by an unknown characteristic estimating means 170. Namely, the unknown term is represented by a following equation.

### (Equation 49)

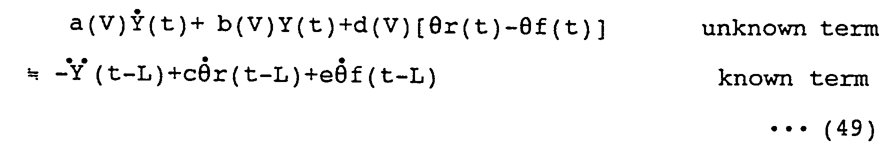

Although the right side of the equation (49) is made a known term, and the left side is made an unknown term in the present embodiment, all the terms of the rear wheel steering angle are made known terms. All the terms about the front wheel steering angle may be made unknown terms.

A following equation can be obtained from the equations (46), (47) where $\text{e(t) = Ym(t) - Y(t)}$ .

### (Equation 50)

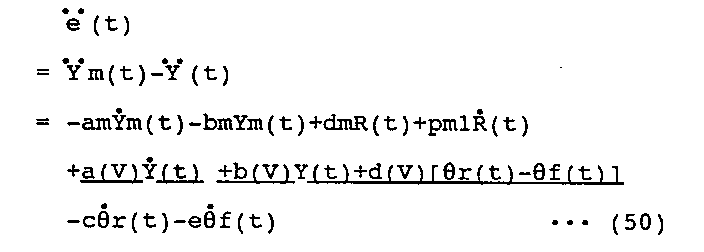

An error dynamics before a microtime L is given from the above equation in accordance with a following equation.

### (Equation 51)

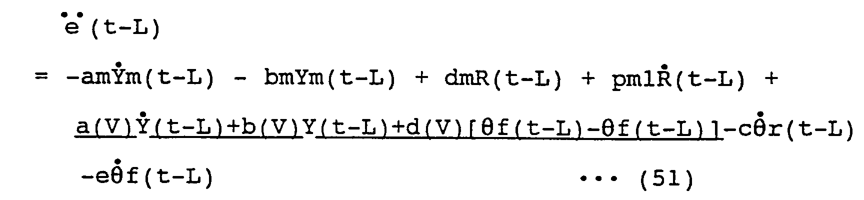

Substitute the equations (46), (49) into the underlined portions of the above equation, and subtract the difference of the equations (50), (51) for rearrangement.

### (Equation 52)

$\text{Δë(t)+amΔ} {\text{e}}^{̇} \text{(t)+bmΔe(t) = - amΔ} {\text{Y}}^{̇} \text{(t)-bmΔY(t)+dmΔR(t)+pm1Δ} {\text{R}}^{̇} \text{(t)-cΔ} {\text{ϑ}}^{̇} \text{r(t)-eΔ} {\text{ϑ}}^{̇} \text{f(t) (52)}$

In $\text{right side = K1Δe(t) + k2Δ} {\text{e}}^{̇} \text{(t)}$

### (Equation 53)

$\text{Δë(t)+amΔ} {\text{e}}^{̇} \text{(t)+bmΔe(t) = k1Δe(t)+k2Δ} {\text{e}}^{̇} \text{(t) (53)}$

Select K1, K2 optionally, and the spreading performance to be desired to _{Δ}e(t) → 0 can be obtained. A rear wheel steering angle ϑr(t) which is a control input that becomes e(t) → 0 from the equation (10) is obtained as K1, k2 = 0.

A control rule which becomes _{Δ}e(t) → 0 is represented by a next equation.

### (Equation 54)

$\text{cΔ} {\text{ϑ}}^{̇} \text{r(t) = -eΔ} {\text{ϑ}}^{̇} \text{f(t)-amΔ} {\text{Y}}^{̇} \text{(t)-bmΔY+dmΔR(t)+pm1Δ} {\text{R}}^{̇} \text{(t) (54)}$

A control rule which becomes e(t)→φ is expressed by a following equation by

### (Equation 55)

$\text{c} {\text{ϑ}}^{̇} \text{r(t) = -e} {\text{ϑ}}^{̇} \text{f(t)-am} {\text{Y}}^{̇} \text{(t)-bmY(t)+dmR(t)+pm1} {\text{R}}^{̇} \text{(t) (55)}$

A differential value is calculated by a following difference equation with a sampling period being provided as L.

### (Equation 56)

A following equation is guided from a (55) equation by

${\text{ϑ}}^{̇} \text{r(t) = [ϑr(t)-ϑr(t-L)]/L (56)}$

From R(t) = ϑf(t),

### (Equation 57)

$\text{ϑr(t) = ϑr(t-L)-(e/c)[ϑf(t)-ϑf(t-L)]+(Ldm/c)ϑf(t)} \text{+(pm1/c)[ϑf(t)-ϑf(t-L)]-(am/c)[Y(t)-Y(t-L)]} \text{-(Lbm/c)Y(t) (57)}$

A front wheel steering angle ϑf is given by a following equation from a handle steering angle ϑH.
$\text{ϑf(t) = ϑH(t) / Ns}$ Ns: steering gear ratio
The above equation is a control input when a two-order differential value of a yaw rate is not used by the embodiment of the present invention. A control which can follow the target yaw rate can be realized without use of two-order differential value that is low in reliability by the use of the equation (50).

Although a control rule which requires a two-story differential value of the yaw rate is used in the conventional TDC as described hereinabove, a control which can follow the target yaw rate without the use of the two-story differential value can be used by the present embodiment.

### (Eighth Embodiment)

An eighth embodiment of the present invention will be described hereinafter. The present embodiment removes a disadvantage in that a small turning property at a starting time cannot be obtained, because a stationary target yaw rate becomes also zero when the vehicle speed is zero in a target yaw rate following system.

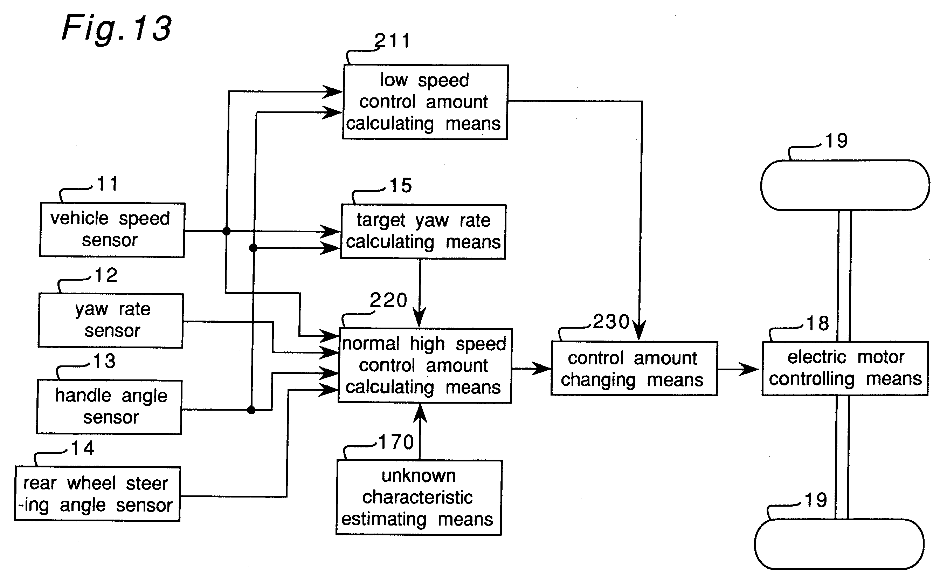

Fig. 13 shows a block diagram of the present embodiment.

In the present embodiment, a target rear wheel steering angle is calculated by a low speed control amount calculating means 211 when a vehicle speed has been judged to be lower than a certain set value by a control amount switching means 230.

### (Equation 58)

$\text{ϑr(t) = K(V)*ϑf(t) (58)}$

Accordingly, a small turning property at a starting time and a low speed time can be obtained. When a vehicle speed has been judged to be higher than a certain set value by a control amount switching means 230, a target rear wheel steering angle is calculated with a target yaw rate following control rule superior in high speed safety, non-linear region and external disturbance safety by a normal, high speed control amount calculating means 220. As one example, a target rear wheel steering angle is calculated by a following equation.

### (Equation 59)

$\text{ϑr(t) = ϑr(t-L)-(e/c)[ϑf(t)-ϑf(t-L)]+(Ldm/c)ϑf(t)} \text{+(pm1/c)[ϑf(t)-ϑf(t-L)]-(am/c)[Y(t)-Y(t-L)]} \text{-(Lbm/c)Y(t) (59)}$

In accordance with the present embodiment, a four-wheel steering system can cope with all the requirements by the use of a control rule which makes much of a small turning property in a low speed region, and a TDC control capable of retaining a high speed safety property in a high speed region.

### (Ninth Embodiment)

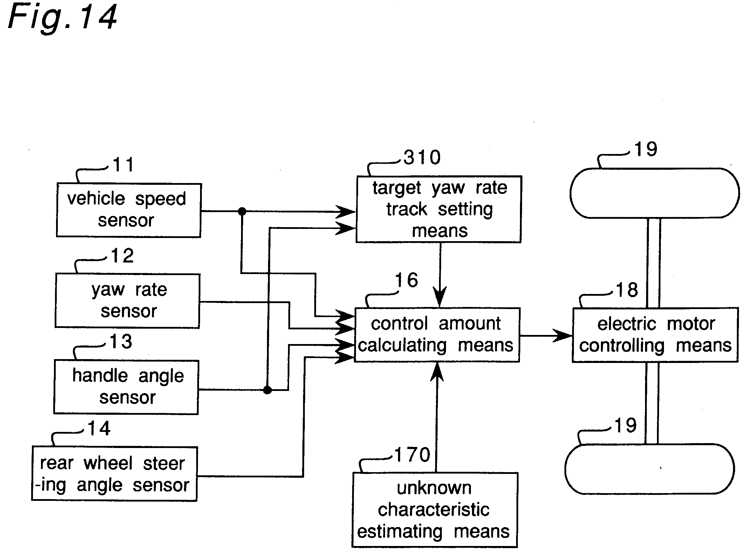

A ninth embodiment of the present invention will be described hereinafter. Fig. 14 shows a block diagram of the present embodiment. A target track of the yaw rate is made Yd, and a deviation with respect to the real yaw rate Y is made E.

### (Equation 60)

$\text{E = Yd - Y (60)}$

Yd is calculated by a target yaw rate orbit setting means 310 on the employment of detected values by, for instance, the vehicle speed sensor 11 and the hand angle sensor 13.

A following equation for governing the dynamic characteristics of the error is obtained from equations (46), (60).

### (Equation 61)

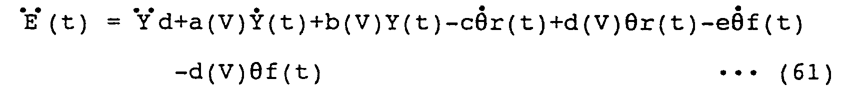

where $\text{right side = K1E(t) + k2} {\text{E}}^{̇} \text{(t)}$

### (Equation 62)

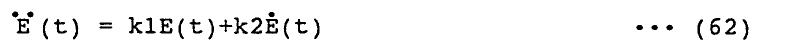

Select K1, K2 optionally, and a spreading performance to be desired to E(t) → 0 can be obtained. An equation to fill in a rear-wheel steering angle ϑr(t) which is a control input that becomes E(t) → 0 from the unknown property estimating means 170, i.e., the equations (49), (61), (62) becomes a following equation.

### (Equation 63)

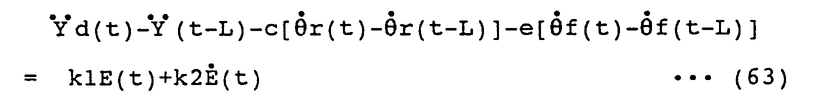

Rearrange the above equation,

### (Equation 64)

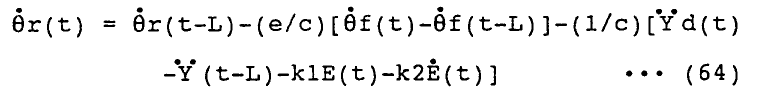

The rear wheel target steering angle ϑr(t) is obtained from the (64) equation by the substitution of a difference equation such as the equation (56) or the like.
It is possible to follow with a desired error dynamic characteristics to be governed by an equation (62) in the control amount operation means 16 even with respect to an optional target yaw rate to be obtained by the target yaw rate orbit setting means 310 with a map of vehicle speed and handle angle or the like.

In accordance with the present embodiment, the TDC control can be adapted even to an optional target yaw rate which cannot be represented with a transfer function.

### (Tenth Embodiment)

A tenth embodiment of the present invention will be described hereinafter.

A road surface friction coefficient µ which is a friction coefficiency between a tire and ground is changed by approximately five times between a DRY road face and a WET road face, so that the transfer characteristics of a vehicle body are changed. When a target yaw rate tuned on a DRY road face is used on the WET road face as it is, the target yaw rate becomes too large so that a spinning operation may be caused. When a target yaw rate set on the WET road face is used on the DRY road face, the yaw rate becomes small, which causes a problem that satisfactory responses cannot be obtained. The present embodiment is adapted to remove such defects.

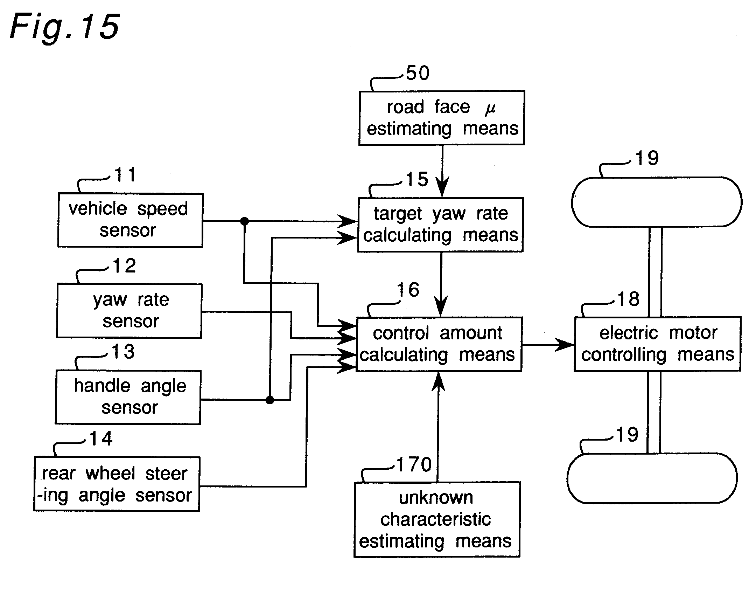

Fig. 15 shows a block diagram of the present embodiment.
A stationary target yaw rate value f(µ') is calculated in accordance with a following equation by an estimated value µ' of the road surface friction coefficient µ.

### (Equation 65)

$\text{Y₀ = A*V*ϑf/(1+B*f(µ)) (65)}$

wherein a function of an estimated value µ' of a road face µ is f(µ'), a vehicle speed is V, a front wheel steering angle is ϑf, A, B are constants. The function f(µ') is made, for example, a monotonous decreasing function. It becomes larger if the µ' is smaller, and becomes smaller if the µ' is larger. It can be calculated so that the stationary yaw rate value may become larger on a DRY road face (high µ road) and it may become smaller on a WET road face (low µ road) so that a target yaw rate corresponding to the state of the road face can be obtained.

In accordance with the present embodiment, it can be calculated that the stationary yaw rate value may become large on the DRY road face (high µ road), and may become small on the WET road face (low µ road) with the use of the estimation value of the road face µ, so that the target yaw rate corresponding to the state of the road face can be obtained.

### (Eleventh Embodiment)

An eleventh embodiment of the present invention will be described hereinafter.

When a handle steering angle is large steered, it goes out of a restriction region of a tire especially on low µ road into a non-linear region so as to lower the steering safety. Therefore, it is necessary to lower the target yaw rate before the restriction of the tire is exceeded.

The present embodiment is to remove such defects. A construction of the present embodiment is similar to that (Fig. 15) of the ninth embodiment.
A stationary target yaw rate value is calculated in accordance with a follow equation by the estimation value µ' of the road face µ.

### (Equation 66)

$\text{Ym₀ = A*V*g(ϑf)/(1 + B*f(µ)) (66)}$

where a function f of an estimated value µ' of a road µ is f (µ'), a vehicle speed is V, a function of a front wheel steering angle ϑf is g(ϑf), A, B are constants.

A function g (ϑf) is given a monotonous increasing function in a map or the like when the front wheel steering angle ϑf is smaller than the ϑfd to be decided from the road face µ and the vehicle speed V. When the front wheel steering angle ϑf becomes larger than the ϑfd, it is given in a monotonous decreasing function. Thus, it is prevented from entering the non-linear region which is beyond the tire restriction without increased setting of the target yaw rate.

In accordance with the present embodiment, a target yaw rate value is set smaller than the yaw rate which becomes a side slip angle β = 0 in accordance with the estimated value µ' of road face µ and the steering amount of the front wheel steering angle, so that it is prevented from entering the nonlinear region which is beyond the restriction of the tire.

### (Twelve Embodiment)

A twelfth embodiment of the present invention will be described hereinafter.

A road face µ is changed by approximately five times between on a DRY road face and on a WET road face, so that the transfer characteristics of a vehicle body are changed. When a control gain C on the DRY road face is used as it is on the WET road face, a following property to the target yaw rate is deteriorated. An optimum control gain C is used on the WET road face, which causes a defect that the stability is deteriorated. The present embodiment is to remove such a defect.

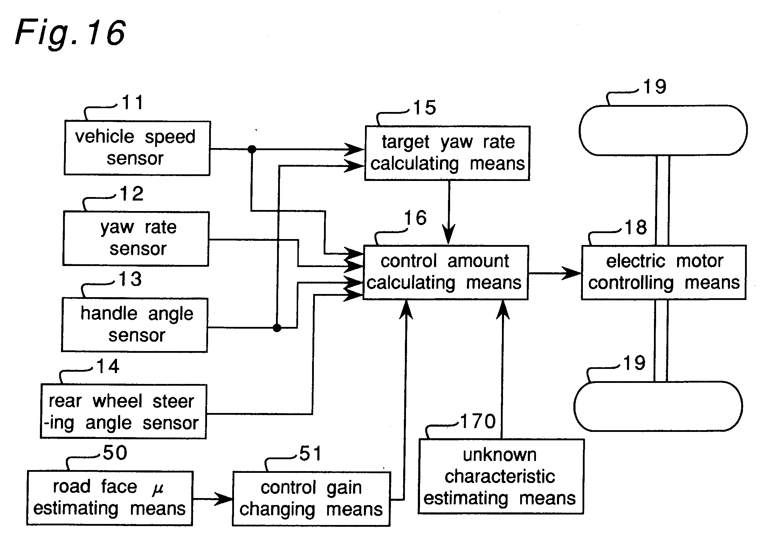

Fig. 16 shows a block diagram of the present embodiment.

In a control gain changing means 51, a parameter c for calculating the control gain is given with a function C(µ'). A control gain is changed in accordance with the value of the estimated µ by the road face µ estimating means 50. Namely, a rear wheel target steering angle to be given by a following equation is used.

### (Number 67)

$\text{ϑr(t) = ϑr(t-L)-{e[ϑf(t)-ϑf(t-L)]+Ldmϑf(t)+pm1[ϑf(t)} \text{-ϑf(t-L)]-am[Y(t)-Y(t-L)]-LbmY(t)}/C(µ') (67)}$

A function C (µ') is made, for example, a monotonous increasing function. When the µ' is smaller, it becomes smaller. When the µ' is larger, it becomes larger.

A control gain corresponding to the state of the road can be used. A control performance satisfactory in both safety · following property can be obtained on all the road faces. In accordance with the present embodiment, a control performance satisfactory in both safety · following property can be obtained by changing the control gain C by the estimated value µ'of road face µ.

As is clear from the foregoing description, according to a first embodiment of the present invention, better control results are obtained even with respect to vehicle speed variation, without preservation of a large amount of gains corresponding to the vehicle speed as a map, by estimating a term where vehicle dynamic characteristics are varied by a vehicle speed, which causes the effect that stable characteristics are shown especially in a high speed region.

According to a second embodiment, a control system capable of high speed response can be made with a simple control rule by regarding the handle steering angle inputs as external disturbances, and estimating a vehicle dynamic characteristic variation term by the handle steering angle input, which causes the effect that better characteristics are shown especially in the low vehicle speed region.

According to a third embodiment, a control input to a rear wheel can be calculated with the use of a front wheel characteristic estimating means as an unknown characteristic estimating rule in a low vehicle speed region, and of a vehicle speed characteristic estimating means in a high vehicle speed region, which causes the effect that stable response which is superior in control performance from the low speed region to the high speed region can be obtained.

According to a fourth embodiment, a rear wheel steering angle can be steered in a reverse phase for a moment by giving a zero point to the yaw rate reference model, which causes the effect that a control system where a side slip angle can be reduced even at a transition time can be constructed.

According to a fifth embodiment, a response property of a vehicle is improved, and a side slip angle at a transient time can be reduced by changing respective coefficients of the yaw rate reference model in accordance with the vehicle speed, which causes the effect that better control performance can be obtained in accordance with the vehicle speed.

According to a sixth embodiment, yaw rate gains and so on are changed equivalently by changing the reference model in accordance with the handle steering angle speed, which causes the effect that optimum responses can be obtained even at a quick handle steering time in collision avoidance and so on.

According to a seventh embodiment, it can be provided an effect for realizing the control capable to follow in good precision to the target yaw rate even if two steps differential values of yaw rate being received largely the influence of noise of the yaw rate sensor signals do not employed.

According to a eighth embodiment, it can be provided to apply to all of needs by employing the TDC control which can secure the high speed stability at the high speed range, and has a control rule for taking a serious view of small sharp turning at the low speed range.

According to a ninth embodiment, it can be provided an effect for realizing various response property applicable to the TDC control by means of giving a target yaw rate orbit with a map against an optional target yaw rate which can not be expressed by a transfer function.

According to a tenth embodiment, it can be provided an effect for obtaining a target yaw rate responding to road conditions by means of calculating the normal yaw rate value on the employment of an estimated value of road plane µ, in such a manner that the normal yaw rate value is large on the RY road plane of high µ road, and is small on the WET road plane of low µ road.

According to a eleventh embodiment, it can be provided an effect for preventing from entering into a nonliner region beyond the limit of tire by means of setting up a target yaw rate value smaller than the yaw rate having side slip angle β being zero in response to the steering amount of front wheel steering angle and the estimate value of road plane µ.

According to a twelfth embodiment, it can be provided an effect for getting a control property satisfying the stability and followability by means of changing the control gain C on the employment of estimated value of road plane µ.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

## Claims

1. An apparatus for controlling a rear wheel steering angle of a four-wheel steering vehicle, wherein in an apparatus for controlling a four-wheel steering for a vehicle which includes a vehicle speed sensor for detecting the speed of a vehicle, a yaw sensor for detecting a yaw rate, a handle angle sensor for detecting a rotary angle of a handle, a rear wheel steering sensor for detecting a rear wheel steering angle, an electric motor controlling means for steering a rear wheel in accordance with a rear wheel steering angle instruction signal, comprising a target yaw rate calculating means for calculating a target yaw rate for spreading to a stationary yaw rate value in accordance with a vehicle speed, a handle angle, an actual yaw rate detected from the yaw rate sensor, a control amount calculating means for calculating a rear wheel steering instruction signal value to the electric motor controlling means with the use of each value of a vehicle speed, a yaw rate, a handle angle, and a rear wheel steering angle detected from the sensor, a vehicle speed characteristic estimating means for estimating the variation term with a term of unknown portion of the dynamic characteristic variation by the vehicle speed change in a vehicle being a constant microtime, wherein a rear wheel steering instruction signal value is calculated with an actual yaw rate becoming a target yaw rate response.

2. An apparatus for controlling a rear wheel steering angle of a four-wheel steering vehicle, wherein in an apparatus for controlling a four-wheel steering for a vehicle which includes a vehicle speed sensor for detecting the speed of a vehicle, a yaw sensor for detecting a yaw rate, a handle angle sensor for detecting a rotary angle of a handle, a rear wheel steering sensor for detecting a rear wheel steering angle, an electric motor controlling means for steering a rear wheel in accordance with a rear wheel steering angle instruction signal, comprising a target yaw rate calculating means for calculating a target yaw rate for spreading to a stationary yaw rate value in accordance with a vehicle speed, a handle angle, an actual yaw rate detected from the yaw rate sensor, a control amount calculating means for calculating a rear wheel steering instruction signal value to the electric motor controlling means with the use of each value of a vehicle speed, a yaw rate, a handle angle, and a rear wheel steering angle detected from the sensor, a front wheel characteristic estimating means for estimating the variation term with a term of unknown portion of the dynamic characteristic variation by the vehicle speed change in a vehicle and the handle operation being a constant microtime, wherein a rear wheel steering instruction signal value is calculated with an actual yaw rate becoming a target yaw rate response.

3. An apparatus for controlling a rear wheel steering angle of a four-wheel steering vehicle, wherein in an apparatus for controlling a four-wheel steering for a vehicle which includes a vehicle speed sensor for detecting the speed of a vehicle, a yaw sensor for detecting a yaw rate, a handle angle sensor for detecting a rotary angle of a handle, a rear wheel steering sensor for detecting a rear wheel steering angle, an electric motor controlling means for steering a rear wheel in accordance with a rear wheel steering angle instruction signal, comprising a target yaw rate calculating means for calculating a target yaw rate for spreading to a stationary yaw rate value in accordance with a vehicle speed, a handle angle, an actual yaw rate detected from the yaw rate sensor, a control amount calculating means for calculating a rear wheel steering instruction signal value to the electric motor controlling means with the use of each value of a vehicle speed, a yaw rate, a handle angle, and a rear wheel steering angle detected from the sensor, a vehicle speed characteristic estimating means for estimating the variation term with a term of unknown portion of the dynamic characteristic variation by the vehicle speed change in a vehicle being a constant microtime, a front wheel characteristic estimating means for estimating the variation term with a term of unknown portion of the dynamic characteristic variation by the vehicle speed change in a vehicle and the handle operation being a constant microtime, the vehicle speed characteristic estimating means and the front wheel characteristic estimating means are switched in accordance with the state variable of the vehicle by the estimating rule changing means, wherein a rear wheel steering instruction signal value is calculated with an actual yaw rate becoming a target yaw rate response.

4. The apparatus for controlling a rear wheel steering angle of a four-wheel steering vehicle as defined in claim 1, 2 or 3, wherein in a target yaw rate calculating means, a target yaw rate is spread to a stationary yaw rate value corresponding to a vehicle speed and a handle angle with a response characteristic of a transfer function G (S) given in a frequency region, and at least more than more stable zero point is provided in the transfer function G (S).

5. The apparatus for controlling a rear wheel steering angle of a four-wheel steering vehicle as defined in claim 1, 2, 3 or 4, wherein in a target yaw rate calculating means, a target yaw rate is spread to a stationary yaw rate value corresponding to a vehicle speed and a handle angle with a response characteristic of a transfer function G (S) given in a frequency region so as to have a spreading characteristic changing means which gives respective coefficients of the transfer function G (S) with the functions of state variables of a vehicle.

6. An apparatus for controlling a rear wheel steering angle of a four-wheel steering vehicle, wherein in an apparatus for controlling a four-wheel steering for a vehicle which includes a vehicle speed sensor for detecting the speed of a vehicle, a yaw sensor for detecting a yaw rate, a handle angle sensor for detecting a rotary angle of a handle, a rear wheel steering sensor for detecting a rear wheel steering angle, an electric motor controlling means for steering a rear wheel in accordance with a rear wheel steering angle instruction signal, comprising a target yaw rate calculating means for calculating a target yaw rate for spreading to a stationary yaw rate value in accordance with a vehicle speed, a handle angle, an actual yaw rate detected from the yaw rate sensor, a control amount calculating means for calculating a rear wheel steering instruction signal value to the electric motor controlling means with the use of each value of a vehicle speed, a yaw rate, a handle angle, and a rear wheel steering angle detected from the sensor, a handle steering angle speed sensor for detecting a handle steering speed, a target yaw rate rule changing means for switching a target yaw rate calculating system of the target yaw rate calculating means in accordance with the values of the handle steering angle speeds, wherein a rear wheel steering instruction signal value is calculated with an actual yaw rate becoming a target yaw rate response in accordance with the handle steering angle speed.

7. The apparatus for controlling a rear wheel steering angle of a four-wheel steering vehicle as defined in claim 6, wherein in a target yaw rate rule changing means, a reference model of a target yaw rate for spreading with the response characteristics of a transfer function G (S) where a zero point having a negative value exists in a stationary yaw rate value corresponding to a vehicle speed, a handle steering angle is used when a handle steering angle speed detected by a handle steering angle speed sensor is larger than a certain set value, and a reference model of a target yaw rate for spreading with a response characteristics of a transfer function F (S) where a zero point does not exist in a stationary yaw rate value corresponding to a vehicle speed, a handle steering angle is used when a handle steering angle speed detected by a handle steering angle speed sensor is smaller than a certain set value.

8. An apparatus for controlling a rear wheel steering angle of a four-wheel steering vehicle as defined in claim 6, wherein in a target yaw rate rule changing means, a value of a zero point of a reference model of a target yaw rate for spreading with a response characteristics of a transfer function G (S) where a zero point having a negative value in a stationary yaw rate value corresponding to a vehicle speed, a handle steering angle is changed in accordance with a size of a handle steering speed detected by a handle steering angle speed sensor.

9. An apparatus for controlling a rear wheel steering angle of a four-wheel steering vehicle as defined in claim 6, wherein in a target yaw rate rule changing means, a value of a zero point of a reference model of a target yaw rate for spreading with a response characteristics of a transfer function G (S) where a zero point having a negative value in a stationary yaw rate value corresponding to a vehicle speed, a handle steering angle is changed in accordance with a value of a handle steering speed detected by a handle steering angle speed sensor and a value of a vehicle speed detected by the vehicle speed sensor.

10. An apparatus for controlling a rear wheel steering angle of a four-wheel steering vehicle, wherein in a four-wheel steering controlling apparatus of a vehicle which includes a vehicle speed sensor for detecting the speed of a vehicle, a yaw rate sensor for detecting the yaw rate, a handle angle sensor for detecting the rotary angle of the handle, a rear wheel steering sensor for detecting a rear wheel steering angle, an electric motor controlling means for steering a rear wheel in accordance with a rear wheel steering instruction signal, comprising a target yaw rate calculating means for calculating a target yaw rate fore spreading to a stationary yaw rate value in accordance with a vehicle speed, a handle angle, a control amount calculating means for calculating a rear wheel steering angle instruction signal value to the electric motor controlling means so that an error between an actual yaw rate detected from the yaw rate sensor and the target yaw rate may become smaller, an unknown characteristic estimating means for estimating the variation term with a term of the unknown portion of the vehicle dynamic characteristic variation being provided as a constant microtime in a difference error dynamics to be given by difference between error dynamics to be defined by the difference in a time k and the error dynamics in k - 1 before one control period, a difference control amount calculating means for calculating a difference control signal for making the difference error zero with the use of respective values of vehicle speed, yaw rate, handle angle, and rear wheel steering angle detected from the sensor, wherein a rear wheel steering angle instruction signal value where the real yaw rate becomes a target yaw rate response by integrating or adding the output signal of the difference control amount calculating means in a control amount calculating means for calculating the rear wheel steering angle instruction signal value.

11. An apparatus for controlling a rear wheel steering angle of a four-wheel steering vehicle, wherein in a four-wheel steering controlling apparatus of a vehicle which includes a vehicle speed sensor for detecting the speed of a vehicle, a yaw rate sensor for detecting the yaw rate, a handle angle sensor for detecting the rotary angle of the handle, a rear wheel steering sensor for detecting a rear wheel steering angle, an electric motor controlling means for steering a rear wheel in accordance with a rear wheel steering instruction signal, comprising a low speed control amount calculating means for calculating a target rear wheel steering angle by a handle steering angle and a vehicle speed in a low speed region where a real vehicle speed is a set value or lower, a normal, high speed control amount calculating means for calculating a target rear wheel steering angle, and a control amount switching means for switching the control amount calculating means by a vehicle speed so that a target yaw rate may be followed in a normal, high speed region where the actual vehicle speed is a certain set value or lower, in the normal, high speed control amount calculating means, a target yaw rate calculating means for calculating a target yaw rate for spreading to a stationary yaw rate value corresponding to a vehicle speed, and a handle angle, an error dynamics to be defined by the error between a real yaw rate detected from the yaw rate sensor and the target yaw rate, a rear wheel steering angle instruction signal value to the electric motor controlling means is calculated, a rear wheel steering angle instruction signal value where a real yaw rate becomes a target yaw rate response is calculated, with the use of respective values of vehicle speed, yaw rate, handle angle, rear wheel steering angle detected from the sensor so that the error may become smaller by the unknown characteristic estimating means for estimating the variation term with a term of the unknown portion of the vehicle dynamic characteristic variation being provided as a microtime constant.

12. An apparatus for controlling a rear wheel steering angle of a four-wheel steering vehicle, wherein in a four-wheel steering controlling apparatus of a vehicle which includes a vehicle speed sensor for detecting the speed of a vehicle, a yaw rate sensor for detecting the yaw rate, a handle angle sensor for detecting the rotary angle of the handle, a rear wheel steering sensor for detecting a rear wheel steering angle, an electric motor controlling means for steering a rear wheel in accordance with a rear wheel steering instruction signal, comprising a target yaw rate trajectory setting means for giving, as a function of time, a trajectory of a target yaw rate for spreading to a stationary yaw rate value in accordance with a vehicle speed and a handle angle, in an error dynamics to be defined as an error between a real yaw rate detected from the yaw rate sensor and a target yaw rate to be given as a trajectory of a function of the time, a rear wheel steering angle instruction signal value to the electric motor controlling means is calculated, a rear wheel steering angle instruction signal value where the real yaw rate becomes a target yaw rate response is calculated, with the use of respective values of vehicle speed, yaw rate, handle angle, rear wheel steering angle detected from the sensor so that the error may become smaller by the unknown characteristic estimating means for estimating the variation term with a term of the unknown portion of the vehicle dynamic characteristic variation being provided as a constant microtime.

13. The apparatus for controlling a rear wheel steering angle of a four-wheel steering vehicle as defined in claim 1, 2, 3, 10, 11 or 12, wherein a road surface µ estimating means for estimating a road face friction coefficient µ in a target yaw rate calculating means, a target yaw rate is adapted to spread to a target trajectory given as a response characteristics of a transfer function G (S) given in a frequency region or as a function of time, into a stationary rate value in accordance with a vehicle sped, a handle angle and a road face friction coefficient µ.

14. The apparatus for controlling a rear wheel steering angle of a four-wheel steering vehicle as defined in claim 13, wherein a stationary yaw rate value Yφ is given with $\text{Yφ = A *V*ϑf / (1 + B*f(µ))}$ where a function of a road face µ is f (µ),, a vehicle speed is V, a front wheel steering angle is ϑf, A, B are constants in a target yaw rate calculating means.

15. The apparatus for controlling a rear wheel steering angle of a four-wheel steering vehicle as defined in claim 13, wherein a stationary yaw rate value Yφ is given with $\text{Yφ = A *V*ϑf / (1 + B*f(µ))}$ where a function of a road face µ is f (µ),, a vehicle speed is V, a function g (ϑf) of a front wheel steering angle is (ϑf), A, B are constants in a target yaw rate calculating means.

16. The apparatus for controlling a rear wheel steering angle of a four-wheel steering vehicle as defined in claim 1, 2, 3, 10, 11 or 12, wherein a target rear wheel steering angle ϑRT is given with $\text{ϑRT = F((ϑf), h(ϑr), h(Y)) / C}$ (wherein ${\text{h(X) = hO*X + h1*dX / dt + h2*d²X / dt²+ ... hk*d}}^{\text{k}} {\text{X / dt}}^{\text{k}} \text{)}$ when the front wheel steering angle is ϑf, the rear wheel steering angle is ϑr, a function of the yaw rate Y is $\text{F((ϑf), h(ϑr), h(Y)) / C}$ in a control amount calculating means in a target yaw rate following system, the C is given with a function C (µ) of a road face µ from a control gain changing means.
